(19) Europäisches Patentamt
European Patent Office
Office européen des brevets

(11) EP 4 801 008 A1

(12) **EUROPEAN PATENT APPLICATION**
published in accordance with Art. 153(4) EPC

(43) Date of publication:
**02.09.2026 Bulletin 2026/36**

(21) Application number: **23959232.2**

(22) Date of filing: **23.11.2023**

(51) International Patent Classification (IPC):
***H04L 65/752*** *(2022.01)*

(52) Cooperative Patent Classification (CPC):
**H04L 65/752**

(86) International application number:
**PCT/CN2023/133801**

(87) International publication number:
**WO 2025/107261 (30.05.2025 Gazette 2025/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
- **LONG, Hua**
  **Shenzhen, Guangdong 518129 (CN)**
- **ZHOU, Weiguang**
  **Shenzhen, Guangdong 518129 (CN)**
- **WU, Kaijie**
  **Shenzhen, Guangdong 518129 (CN)**
- **DUAN, Haojie**
  **Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(54) **VIRTUAL CHANNEL ESTABLISHMENT METHOD AND APPARATUS**

(57) This application discloses a virtual channel establishment method and apparatus, and relates to the field of multimedia technologies. Between an initiating device and a destination device of an audio and video service stream, virtual shuttles of various levels on a virtual channel of the audio and video service stream are established by processing an adapter list request and response and a bandwidth application request and response. This allows for flexible determining of a transmission path corresponding to the virtual channel, thereby preventing the transmission path from depending on a fixed physical connection line. The audio and video service stream is transmitted between two ports through the virtual shuttle, which decouples transmission of the audio and video service stream from a physical connection manner between the ports, and further improves flexibility of changing the transmission path of the audio and video service stream.

Initiating device 31
Bus 34
Intermediate device 33
Bus 34
Destination device 32
Step 301/302: Adapter list request
Step 303/304: Adapter list request
Step 305/306: Adapter list response
Step 307/308: Adapter list response
Step 309: Generate a bandwidth application request
Step 310: Allocate bandwidth to a first virtual shuttle of a virtual channel based on an output stream bandwidth required by an audio and video service stream
Step 311/312: Bandwidth application request (including a first output stream bandwidth)
Step 313: Allocate bandwidth to a second virtual shuttle based on the first output stream bandwidth in response to the bandwidth application request
Step 314/315: Bandwidth application request (including a fourth output stream bandwidth)
Step 316/317: Bandwidth application response (including a sixth output stream bandwidth)
Step 318: Allocate bandwidth to the second virtual shuttle in response to the bandwidth application response
Step 319/320: Bandwidth application response (including the sixth output stream bandwidth)
Step 321: Allocate bandwidth to the first virtual shuttle in response to the bandwidth application response
FIG. 3



Processed by Luminess, 75001 PARIS (FR)

## Description

### TECHNICAL FIELD

This application relates to the field of multimedia technologies, and in particular, to a virtual channel establishment method and apparatus.

### BACKGROUND

An existing audio and video transmission network usually uses tree networking, for example, an audio and video transmission network based on a high-definition multimedia interface (High-Definition Multimedia Interface, HDMI). In the tree networking, a transmission path of an audio and video service stream is determined by physical connection lines between ports of devices in the audio and video transmission network.

However, when a sink device needs to be specified for a source device of the audio and video service stream to transmit the audio and video service stream, or when a sink device needs to be switched for a source device of the audio and video service stream to transmit the audio and video service stream, the physical connection lines in the audio and video transmission network need to be connected or changed, leading to a problem of poor flexibility in the transmission path of the audio and video service stream.

### SUMMARY

This application provides a virtual channel establishment method and apparatus, to resolve a problem that establishment of a transmission path of an audio and video transmission network depends on a physical connection line, and improve flexibility of a transmission path of an audio and video service stream.

According to a first aspect, this application provides a virtual channel establishment method. The virtual channel establishment method is applied to an initiating device or a processor of the initiating device. The initiating device is connected to an intermediate device or a destination device through a unified multimedia interconnection interface (unified multimedia interconnection, UMI) bus. The virtual channel establishment method includes: First, the initiating device sends an adapter list, and receives a returned adapter list response, where the adapter list response includes identifiers of a plurality of adapters included in the destination device; then, the initiating device allocates bandwidth to a first virtual shuttle of the virtual channel based on an output stream bandwidth required by an audio and video service stream, and sends a bandwidth application request to indicate a next-level device on the virtual channel to allocate bandwidth to a second virtual shuttle based on a first output stream bandwidth, where the second virtual shuttle is a next-level virtual shuttle of the first virtual shuttle; and finally, the initiating device receives a bandwidth application response, to complete establishment of the virtual channel.

The virtual channel (channel) includes a plurality of concatenated virtual shuttles between a source adapter of the initiating device of the audio and video service stream and a sink adapter among the plurality of adapters of the destination device of the audio and video service stream. The virtual shuttle is used to transmit the audio and video service stream over a link between two ports.

Based on the foregoing virtual channel establishment method, the initiating device can determine, based on the adapter list response, the plurality of adapters included in the destination device, to identify a virtual channel from the initiating device to the destination device. In this way, a device through which the virtual channel passes may be selected based on a requirement. In other words, a transmission path corresponding to the virtual channel may be flexibly determined, preventing the transmission path from depending on a fixed physical connection line. In addition, the bandwidth application request indicates each device on the virtual channel to complete bandwidth allocation for a corresponding virtual shuttle, which implements hierarchical creation of specified virtual shuttles. The audio and video service stream is transmitted between two ports through the virtual shuttle, which decouples transmission of the audio and video service stream from a physical connection manner between the ports, and further improves flexibility of changing the transmission path of the audio and video service stream.

According to a second aspect, this application provides a virtual channel establishment method. The virtual channel establishment method is applied to an intermediate device or a processor of the intermediate device. The intermediate device is connected to each of an initiating device and a destination device through a UMI bus. The virtual channel establishment method includes: First, the intermediate device receives a bandwidth application request, where a bandwidth application response includes a first output stream bandwidth; then, in response to the bandwidth application request, the intermediate device allocates bandwidth to a second virtual shuttle based on the first output stream bandwidth, and forwards the bandwidth application request carrying a fourth output stream bandwidth to indicate a next-level device on the virtual channel to allocate bandwidth to a next-level virtual shuttle of the second virtual shuttle, namely, a fourth virtual shuttle based on the fourth output stream bandwidth; and finally, after receiving a bandwidth

application response, the intermediate device forwards the bandwidth application response, to complete establishment of the virtual channel.

Based on the foregoing virtual channel establishment method, the intermediate device can complete establishment of a specified virtual shuttle through sending and receiving of the bandwidth application request and the bandwidth application response. This decouples transmission of the audio and video service stream from a physical connection manner between ports, prevents a transmission path from depending on a fixed physical connection line, and improves flexibility of changing the transmission path of the audio and video service stream.

According to a third aspect, this application provides a virtual channel establishment method. The virtual channel establishment method is applied to a destination device or a processor of the destination device. The destination device is connected to an intermediate device or an initiating device through a UMI bus. The virtual channel establishment method includes: First, the destination device receives an adapter list request, and returns an adapter list response, where the adapter list response includes identifiers of a plurality of adapters included in the destination device; and then, the destination device receives a bandwidth application request including a fifth output stream bandwidth, and returns a bandwidth application response including a sixth output stream bandwidth, where the sixth output stream bandwidth indicates an output stream bandwidth obtained through an application.

Based on the foregoing virtual channel establishment method, after receiving the bandwidth application request, the destination device returns the bandwidth application response to indicate that the initiating device on the virtual channel is allocated with the output stream bandwidth, thereby starting transmission of the audio and video service stream. In this way, a transmission path of the audio and video service stream can be established or switched without changing a physical connection line of an audio and video transmission network, which improves flexibility of changing the transmission path of the audio and video service stream.

With reference to the virtual channel establishment methods according to the first aspect to the third aspect, in a possible implementation, before allocating bandwidth to the first virtual shuttle, the initiating device determines a sink adapter among the plurality of adapters, and determines, among a plurality of paths included in a topology structure between the source adapter and the sink adapter, a virtual channel from the source adapter to the sink adapter.

With reference to the virtual channel establishment methods according to the first aspect to the third aspect, in a possible implementation, in a complex networking scenario, before sending the bandwidth application request, the initiating device performs adapter binding to lock a resource (for example, a resource such as bandwidth), thereby avoiding a virtual channel establishment failure due to preemption of an adapter and bandwidth of the adapter by another device. Optionally, the initiating device sends an adapter binding request. The adapter binding request includes an identifier of the sink adapter. The destination device receives the adapter binding request and returns an adapter binding response. The adapter binding response indicates that the sink adapter is bound. The initiating device receives the adapter binding response, to complete binding between the source adapter and the sink adapter. The adapter binding request or the adapter binding response may be forwarded by the intermediate device.

With reference to the virtual channel establishment methods according to the first aspect to the third aspect, in a possible implementation, before sending the bandwidth application request, the initiating device may alternatively query available output stream bandwidths of the plurality of paths included in the topology structure between the source adapter and the sink adapter, to select an appropriate virtual channel. Optionally, the initiating device sends a bandwidth query request. The bandwidth query request includes a second output stream bandwidth, and the second output stream bandwidth indicates an available output stream bandwidth of an output port of the initiating device. The destination device receives the bandwidth query request, and returns a bandwidth query response. The bandwidth query response includes a third output stream bandwidth, and the third output stream bandwidth indicates a minimum available output stream bandwidth across all ports through which the virtual channel passes. After receiving the bandwidth query response, the initiating device completes a bandwidth query for each port on a topology path between the source adapter and the sink adapter.

Optionally, when the third output stream bandwidth in the bandwidth query response is greater than or equal to the required output stream bandwidth, the initiating device sends the bandwidth application request.

Optionally, when the third output stream bandwidth in the bandwidth query response is less than the required output stream bandwidth, the initiating device switches the virtual channel between the source adapter and the sink adapter. In other words, the initiating device selects another virtual channel among the plurality of paths included in the topology structure between the source adapter and the sink adapter.

Optionally, when the third output stream bandwidth in the bandwidth query response is less than the required output stream bandwidth, the initiating device may alternatively determine, based on a service stream requirement, whether to reduce a specification of the audio and video service stream, and then send the bandwidth application request to establish the virtual channel. For example, when the third output stream bandwidth is less than the required output stream bandwidth, the specification of the audio and video service stream is reduced, where the specification includes a resolution, a color space, and/or a bit depth.

According to a fourth aspect, this application provides a virtual channel establishment apparatus. The virtual

channel establishment apparatus includes a module configured to perform the method according to any one of the implementations of the first aspect, the second aspect, or the third aspect.

According to a fifth aspect, this application provides a multimedia device. The multimedia device includes a processor and a transceiver. For example, the processor is configured to process an audio and video service stream, the transceiver is configured to receive and send the audio and video service stream, and the processor and the transceiver collaboratively perform the method according to any one of the optional implementations of the first aspect, the second aspect, or the third aspect.

According to a sixth aspect, this application provides a multimedia data transmission system. The multimedia data transmission system includes a plurality of multimedia devices according to the fifth aspect. A multimedia device configured to send an audio and video service stream is an initiating device, a multimedia device configured to receive the audio and video service stream is a destination device, and a multimedia device configured to forward the audio and video service stream is an intermediate device. The initiating device may be configured to implement a function of the initiating device in the first aspect, the intermediate device may be configured to implement a function of the intermediate device in the second aspect, and the destination device may be configured to implement a function of the destination device in the third aspect. Therefore, the multimedia data transmission system can also achieve beneficial effects of the methods according to the first aspect to the third aspect. Details are not described herein again.

According to a seventh aspect, this application provides a computer-readable storage medium. The computer-readable storage medium includes computer software instructions. When the computer software instructions are run on a compute device, the compute device is enabled to perform the operation steps of the method according to the first aspect or any one of the possible implementations of the first aspect, perform the operation steps of the method according to the second aspect or any one of the possible implementations of the second aspect, and perform the operation steps of the method according to the third aspect or any one of the possible implementations of the third aspect. For example, the compute device is the initiating device or the destination device.

According to an eighth aspect, this application provides a computer program product. When the computer program product is run on a computer, a compute device is enabled to perform the operation steps of the method according to the first aspect or any one of the possible implementations of the first aspect, perform the operation steps of the method according to the second aspect or any one of the possible implementations of the second aspect, and perform the operation steps of the method according to the third aspect or any one of the possible implementations of the third aspect. For example, the computer is the initiating device or the destination device.

For beneficial effects of the fourth aspect to the eighth aspect, refer to descriptions of any implementation of the first aspect to the third aspect. Details are not described herein again. In this application, based on the implementations provided in the foregoing aspects, the implementations may be further combined to provide more implementations.

## BRIEF DESCRIPTION OF DRAWINGS

FIG. 1 is a diagram of a video transmission system according to this application;
FIG. 2 is a diagram of an audio and video encoding and decoding system according to this application;
FIG. 3 is a schematic flowchart of a virtual channel establishment method according to this application;
FIG. 4 is a diagram of a virtual channel according to this application;
FIG. 5 is a diagram of multicast on a virtual channel according to this application;
FIG. 6 is a schematic flowchart of an adapter binding operation according to this application;
FIG. 7 is a schematic flowchart of a bandwidth query operation according to this application;
FIG. 8 is a diagram of a structure of a virtual channel establishment apparatus according to this application; and
FIG. 9 is a diagram of a structure of a multimedia device according to this application.

## DESCRIPTION OF EMBODIMENTS

This application provides a virtual channel establishment method. An initiating device first sends an adapter list request to a destination device, to receive an adapter list response returned by the destination device. The adapter list response includes identifiers of a plurality of adapters included in the destination device. In this way, a virtual channel between a source adapter of the initiating device and a sink device among the plurality of adapters of the destination device is determined. Then, the initiating device allocates bandwidth to a first virtual shuttle of the virtual channel based on the output stream bandwidth required by an audio and video service stream, and sends a bandwidth application request to indicate a next-level device on the virtual channel to allocate bandwidth to a second virtual shuttle based on the first output stream bandwidth. The second virtual shuttle is a next-level virtual shuttle of the first virtual shuttle. Finally, the destination device returns a bandwidth application response after receiving the bandwidth application request, and the initiating

device receives the bandwidth application response, to complete establishment of the virtual channel. The request or response may be forwarded between the initiating device and the destination device by using one or more intermediate devices.

In this way, the initiating device can determine, based on the adapter list response, the plurality of adapters included in the destination device, to identify the virtual channel from the initiating device to the destination device. A device through which the virtual channel passes may be selected based on a requirement. In other words, a transmission path corresponding to the virtual channel may be flexibly determined, preventing the transmission path from depending on a fixed physical connection line. In addition, the bandwidth application request indicates each device on the virtual channel to complete bandwidth allocation for a corresponding virtual shuttle, which implements hierarchical creation of specified virtual shuttles. The audio and video service stream is transmitted between two ports through the virtual shuttle, which decouples transmission of the audio and video service stream from a physical connection manner between the ports, and further improves flexibility of changing the transmission path of the audio and video service stream.

Technical solutions in this application may be applied to existing audio and video transmission technologies or audio and video standards, and also may be applied to future audio and video transmission technologies or audio and video standards. Terms used in implementations of embodiments of this application are merely used to explain specific embodiments of this application, but are not intended to limit this application. The following first briefly describes some concepts that may be used in this application.

An audio and video service stream includes an audio stream (audio stream) and/or a video stream (video stream). The audio stream is a data stream for transmitting audio data in real time. The video stream is transmission of video data. For example, a video stream can be processed as a stable and continuous stream through a network. The video stream includes a plurality of video frames, and each video frame corresponds to a frame of image.

In this embodiment, a video is a general term. The video includes a sequence of images of a plurality of consecutive frames, and one frame corresponds to one image. Audio and video is a term in information application technologies, and is a video, audio, or multimedia content including a video and audio. In addition, a type of a service stream is not limited in this application. For example, the service stream in this application may be an audio and video service stream, or may be a USB service stream. The following mainly uses the audio and video service stream as an example for description.

A router forwarding table may be referred to as a forwarding table or a forwarding information base (forwarding information base, FIB), and is a table located on a data plane of a router. An entry in the router forwarding table is referred to as a forwarding entry or a forwarding item. Each forwarding entry specifies information such as a destination to reach, an outbound interface that needs to be passed through, and a next-hop IP address.

To make descriptions of the following embodiments clear and concise, a video transmission system to which the virtual channel establishment method in this application is applicable is first described.

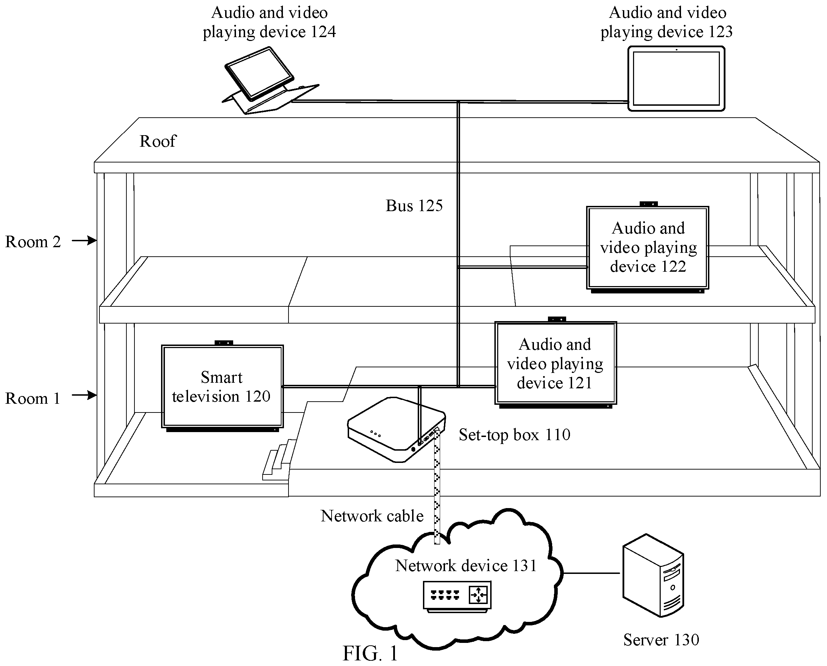

FIG. 1 is a diagram of the video transmission system according to this application. A video processing process may include but is not limited to: video capture, video encoding, video transmission, video decoding, and video playing processes.

The video transmission system in FIG. 1 includes a set-top box 110, a smart television 120, a plurality of audio and video playing devices, and a server 130. The set-top box 110 is connected to an operator network through a network cable, and may receive an audio and video stream from the server 130. A network may implement an audio and video transmission function. The network may include one or more network devices. For example, a network device 131 may be a router, a switch, or the like. In some optional implementations, the set-top box 110 and the server 130 may also communicate with each other through wireless communication. This is not limited in this application.

The video transmission system in FIG. 1 includes a set-top box 110, a smart television 120, a plurality of audio and video playing devices, and a server 130. The set-top box 110 is connected to an operator network through a network cable, and may receive an audio and video stream from the server 130. A network may implement an audio and video transmission function. The network may include one or more network devices. For example, a network device 131 may be a router, a switch, or the like. In some optional implementations, the set-top box 110 and the server 130 may also communicate with each other through wireless communication. This is not limited in this application.

The smart television 120 is a display device with an audio and video processing function, and implements functions such as receiving, processing, pushing, and playing of a video stream or an audio and video stream. In some possible cases, the smart television 120 may be an audio and video device such as a conference panel, a smart television, or a projector. This is not limited in this application.

The plurality of audio and video playing devices include an audio and video playing device 121 to an audio and video playing device 124. For example, the audio and video playing devices may include but are not limited to a multimedia control platform or another device that supports an audio and video playing function, for example, a virtual reality (virtual reality, VR) terminal device or an augmented reality (augmented reality, AR) terminal device.

In this embodiment, the set-top box 110 may be connected to the smart television 120 through a bus 125, the set-top box 110 may also be connected to each audio and video playing device through the bus 125, and the smart television

120 may also be connected to each audio and video playing device through the bus 125. For example, the bus 125 may be a data bus that supports video transmission and audio and video transmission. For example, the bus 125 is a UMI bus. The UMI bus is a bus connected based on UMI interfaces provided by a source device and a sink device. The UMI bus may be configured to connect to a charger for charging an electronic device (for example, the foregoing smart television, set-top box, or audio and video playing device), or may be configured to transmit data between an electronic device and a peripheral device, or may be configured to connect to a headset for playing audio through the headset. The interface may be further configured to connect to another electronic device, for example, an AR device. When the UMI bus is used to implement a data communication function between devices, the UMI bus may support transmission of a non-compressed video and a compressed video, and may also support a plurality of advanced features such as quick video transport (Quick Video Transport, QVT), auto low latency mode (Auto Low Latency Mode, ALLM), and dynamic frame rate refresh (Dynamic Frame Rate Refresh, DFR). In addition, the UMI bus may also support audio and video in an LPCM format defined in IEC 60958, as well as a plurality of HDR protocols, for example, an HDR protocol specified in T/UWA005.1-2022 such as HDR Vivid (HDR Vivid). The UMI also supports encryption, control, and protection for audio and video data transmission. In some optional implementations, the bus 125 may alternatively be another type of bus, and can implement functions supported by the foregoing UMI bus.

The server 130 may be an application server or an authentication and authorization server. The server 130 may provide a video service, a game service, a message service, a music service, an authentication and authorization service, and the like. In an example, functions of a plurality of services may be integrated into the server 130. For example, the game service and the music service may be deployed on the server 130. In another example, functions of a part of services may be integrated into the server 130. For example, a part of the game service and a part of the video service are deployed on the server 130. The server 130 may further provide a plurality of virtual machines by using a virtualization technology, and the virtual machines provide various services. A deployment form of the server is not limited in embodiments of this application. The network device 131 is connected to the server 130 in a wireless or wired manner. FIG. 1 is merely a diagram. The network may further include another device that is not shown in FIG. 1. It may be understood that the audio and video is a general term. The audio and video include a plurality of video frames, one video frame corresponds to one group of packets, and the group of packets carries audio and video data to be parsed and played. FIG. 1 is merely a diagram. The video transmission system may further include another device that is not shown in FIG. 1. A quantity and a type of each device included in the system are not limited in embodiments of this application.

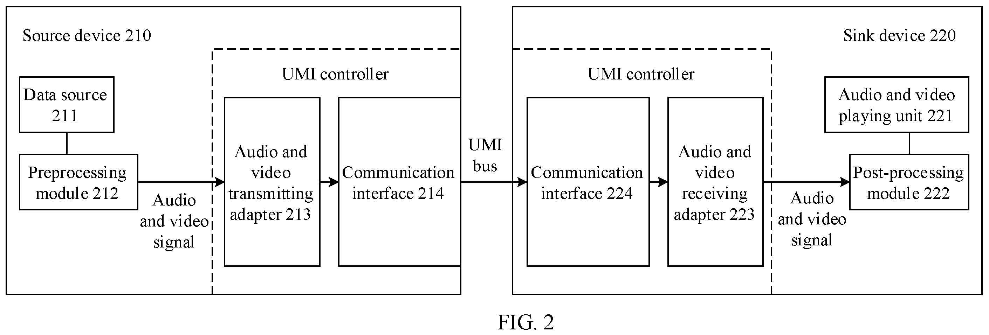

Based on the video transmission system shown in FIG. 1, FIG. 2 is a diagram of an audio and video encoding and decoding system according to this application. The audio and video encoding and decoding system includes a source device 210 and a sink device 220. The source device 210 establishes a communication connection with the sink device 220 through a UMI bus.

The source device 210 may implement an audio and video encoding function. As shown in FIG. 1, the source device 210 may be the set-top box 110 or the smart television 120, and the source device 210 may also be an audio and video control center with an audio and video encoding capability. For example, the audio and video control center includes one or more servers.

The source device 210 may include a data source 211, a preprocessing module 212, an audio and video transmitting adapter 213, and a communication interface 214.

The data source 211 may include or may be any type of electronic device configured to capture audio and video, and/or any type of source audio and video generation device, for example, a computer graphics processor configured to generate a computer animation scene or any type of device configured to obtain and/or provide source audio and video or computer-generated source audio and video. The data source 211 may be any type of internal memory or memory storing the source audio and video. The source audio and video may include a plurality of audio and video streams or images captured by a plurality of audio and video capturing apparatuses (for example, a camera), for example, an ultra-high-definition (Ultra-High-Definition, UHD) video, a high-definition (High-Definition, HD) video, and a 4K video.

The preprocessing module 212 is configured to: receive the source audio and video, and preprocess the source audio and video to obtain audio and video or a plurality of frames of images. For example, preprocessing performed by the preprocessing module 212 may include color format conversion (for example, conversion from RGB to YCbCr), octree structuring, audio and video splicing, audio track merging and deletion, or adjustment of a quantity of sound channels.

The audio and video transmitting adapter 213 is also a source adapter in this application, and is configured to: receive audio and video or an image, and encode the audio and video, the image, or the image to obtain encoded data. In some optional cases, a bitstream (encoded data) obtained through encoding may also be referred to as a bit stream. If the encoded data is obtained by encoding audio and video data, the bit stream is an audio and video stream.

The communication interface 214 of the source device 210 may be configured to: receive the encoded data (for example, a video stream or an audio and video stream), and send the encoded data (or a version of the encoded data obtained through any other processing) to another device such as the sink device 220 or any other device through the UMI bus, to facilitate storage, display, playing, image reconstruction, or the like.

Optionally, the source device 210 includes a bit stream buffer, and the bit stream buffer is used to store a bit stream

corresponding to one or more coding units.

The sink device 220 may implement an audio and video decoding function. As shown in FIG. 1, the sink device 220 may be any one of the smart television 120 or the audio and video playing devices shown in FIG. 1.

The sink device 220 may include an audio and video playing unit 221, a post-processing module 222, an audio and video receiving adapter 223, and a communication interface 224.

The communication interface 224 in the sink device 220 is configured to receive the encoded data (or the version of the encoded data obtained through any other processing) from the source device 210 or from any other source device such as a storage device.

The communication interface 214 and the communication interface 224 may be used for a direct communication link between the source device 210 and the sink device 220, for example, a direct wired connection such as the UMI bus shown in FIG. 2. For content of the UMI bus, refer to descriptions of FIG. 1. Details are not described herein again.

The communication interface 224 corresponds to the communication interface 214, and may be configured to, for example, receive transmitted data, and process the transmitted data through any type of corresponding transmission decoding or processing and/or decapsulation to obtain the encoded data (for example, a video stream or an audio and video stream).

The communication interface 224 and the communication interface 214 each may be configured as a unidirectional communication interface as indicated by an arrow in FIG. 2 that corresponds to the UMI bus and that points from the source device 210 to the sink device 220, or a bidirectional communication interface, and may be configured to: send and receive a message or the like to establish a connection, and determine and exchange any other information related to a communication link or data transmission such as transmission of encoded compressed data, or the like.

The audio and video receiving adapter 223 is also referred to as a sink adapter in this application, and is configured to: receive the encoded data, and decode the encoded data to obtain decoded data (a video, audio and video, or the like).

The post-processing module 222 is configured to perform post-processing on the decoded data obtained after decoding to obtain post-processed data (for example, a to-be-displayed image or to-be-played audio and video). Post-processing performed by the post-processing module 222 may include, for example, color format conversion (for example, conversion from YCbCr to RGB), octree reconstruction, audio and video splitting and merging, or any other processing such as generating data for output by the audio and video playing unit 221.

The audio and video playing unit 221 is configured to receive the post-processed data, to display or play the post-processed data to a user, a viewer, or the like. The audio and video playing unit 221 may be or may include any type of display for representing a reconstructed image, for example, an integrated or external display or monitor. For example, the display may include a liquid crystal display (liquid crystal display, LCD), an organic light-emitting diode (organic light-emitting diode, OLED) display, a plasma display, a projector, a micro LED display, a liquid crystal on silicon (liquid crystal on silicon, LCoS) display, a digital light processor (digital light processor, DLP), or any type of another display. The audio and video playing unit 221 may further include one or more audio and video playing modules, and each audio and video playing module may be a sounder, a smart speaker, a power amplifier, or the like.

In an optional implementation, the source device 210 and the sink device 220 may transmit the encoded data via a data forwarding device. For example, the data forwarding device may be a router or a switch. It should be noted that the data forwarding device needs to support a UMI interface. UMI interfaces of the two devices include a main link (main link, ML), a sideband link (sideband link, SL), a powerbus link (powerbus link, PL), and a cable information link (cableInfo link, CL). This application does not involve the links except the main link. The following describes only the main link. The main link is mainly used to transmit the audio and video service stream (for example, an ultra-high-definition audio and video signal) and high-speed data (for example, USB 3 data). The main link includes a plurality of pairs of differential lines, and each pair of differential lines forms a differential lane (lane). A virtual shuttle between the audio and video transmitting adapter 213 and the audio and video receiving adapter 223 may use the differential lane to transmit the audio and video service stream.

The following describes in detail, with reference to the accompanying drawings, implementations of the virtual channel establishment method according to an embodiment of this application.

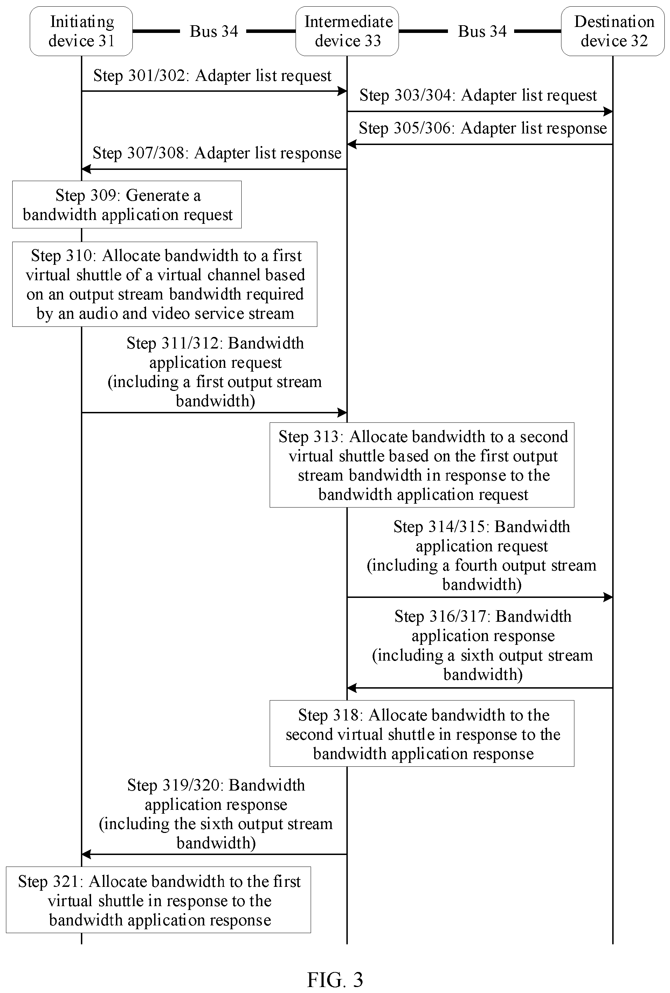

Herein, an example in which the virtual channel establishment method in this embodiment of this application is performed by the source device 210 and the sink device 220 shown in FIG. 2 is used for description. FIG. 3 is a schematic flowchart of the virtual channel establishment method according to this application. An initiating device 31 is configured to implement a function of the source device 210, and a destination device 32 is configured to implement a function of the sink device 220. In this embodiment, the initiating device 31 may also be referred to as a source device, an audio and video transmitting end, or an audio and video transmitting device, and the destination device 32 may also be referred to as a sink device, a display device, an audio and video receiving device, or an audio and video playing device. In this embodiment, the initiating device 31 and the destination device 32 are connected through one or more intermediate devices 33 (FIG. 3 shows only one intermediate device 33, but a quantity of intermediate devices is not limited). The initiating device 31, the intermediate device 33, and the destination device 32 are connected through a bus 34. The bus 34 may be a UMI bus.

In a first possible application scenario, the initiating device 31 may be the set-top box 110 in FIG. 1, and the destination device 32 may be the smart television 120 in FIG. 1. For example, the set-top box pushes audio and video data to the smart television.

In a second possible application scenario, the initiating device 31 may be the set-top box 110 in FIG. 1, and the destination device 32 may be any audio and video playing device in FIG. 1, for example, any one of the audio and video playing device 121 to the audio and video playing device 124. For example, the set-top box pushes audio and video data to the audio and video playing device.

In a third possible application scenario, the initiating device 31 may be the smart television 120 in FIG. 1, and the destination device 32 may be any audio and video playing device in FIG. 1, for example, any one of the audio and video playing device 121 to the audio and video playing device 124. For example, the smart television pushes audio and video data to the audio and video playing device.

The three possible application scenarios are merely examples provided in this embodiment, and should not be construed as a limitation on this application. In some other possible examples, the initiating device 31 may be any audio and video playing device (for example, the audio and video playing device 121) in FIG. 1, and the destination device 32 may be another audio and video playing device (for example, the audio and video playing device 122) different from the foregoing audio and video playing device.

Refer to FIG. 3. The virtual channel establishment method according to this embodiment includes the following step 301 to step 321.

Step 301: The initiating device 31 sends an adapter list request.

When the initiating device 31 needs to obtain adapter list information before establishing a virtual channel, the initiating device 31 generates the adapter list request, and sends the adapter list request based on device address addressing information.

In a possible implementation, a message structure of the adapter list request is shown in Table 1, and message fields in the adapter list request are described in Table 2.

Table 1

31 30 29 28 27 26 25 24 23 22 21 20 19 18 17 16 15 14 13 12 11 10 9 8 7 6 5 4 3 2 1 0
Packet header

| Universal field | |
|---|---|
| Device address addressing information | |
| Padding | Command=6 |
| CRC32 | |

Table 2

| Location (4 bytes) | Field segment | Name | Description |
|---|---|---|---|
| 0 | 31:0 | Packet header | See Table 3. |
| 1 | 31:0 | Universal field | See Table 4. |
| 2-5 | 31:0 | Device address addressing information | See Table 5. |
| | ... | Device address addressing information... | ... |
| 6 | 7:0 | Command | Device control command number, which is 6 |
| | 31:8 | Padding | Padding data, for 4-byte alignment |

(continued)

| Location (4 bytes) | Field segment | Name | Description |
|---|---|---|---|
| 7 | 31:0 | CRC32 | Check code |

Command=6 indicates that the device control command number corresponding to the adapter list request is 6.

Optionally, a message structure of the packet header is shown in Table 3.

Table 3

| Field segment | Name | Description |
|---|---|---|
| 5:0 | ECC | Error checking and correcting (Error Checking and Correcting, ECC) check field for bits [31:6] of the packet header |
| 6 | Tunnel (T) | Tunnel packet flag. A value is fixed to 1 for a management data packet. |
| 15:7 | Length | Payload length. A unit is byte (Byte). A value ranges from 0 to 508, and is a multiple of 4. |
| 20:16 | Type | Type of a management message transmitted by the management data packet. This field segment adds bit[20] compared with a transport layer packet header. |
| 22:21 | Rsvd | Reserved |
| 23 | Response (Rsp) | Indicates whether a message is a response message.<br>0: request message<br>1: response message |
| 30:24 | ShuttleID | A value is fixed to 0 for the management data packet. |
| 31 | Rsvd | Reserved |

In the packet header of the adapter list request, a value of Type is 27, indicating that a packet type is an adapter list request. A value of Response is 0, indicating that the message is the request message.

Optionally, a message structure of the universal fields is shown in Table 4.

Table 4

| Location | Field segment name | Description |
|---|---|---|
| 7:0 | Error Code | Error code |
| 10:8 | Sequence No (SeqNo) | Sequence number of a current management data packet.<br>Range: 0-7. |
| 11 | Last (L) | Indicates whether a packet is a last packet.<br>0: The packet is a first packet or an intermediate packet.<br>1: The packet is the last packet. |
| 15:12 | Rsvd | Reserved |
| 22:16 | Channel ShuttleID (virtual shuttle identifier) | Shuttle ID used by a virtual shuttle of a service stream processed by a message at an egress of a current device.<br>This field segment is used only for a bandwidth application message, a bandwidth adjustment message, a bandwidth release message, and a channel release message. The channel release message also uses this field segment as routing information. |

(continued)

| Location | Field segment name | Description |
|---|---|---|
| 23 | Channel (C) | Virtual channel identifier, used only for a bandwidth query message<br>0: A minimum available upstream bandwidth and a minimum available downstream bandwidth of an entire virtual channel are queried.<br>1: Available upstream bandwidth and available downstream bandwidth of each level of egress are queried. |
| 31:24 | Tag | Message identifier. Range: 0-255.<br>Each time when a management adapter sends a management message from any port of a local device, this field is circularly incremented. This field segment needs to be the same for all management data packets of a same management message. |

Optionally, addressing information requested by a bandwidth device is device address addressing information, or referred to as device address addressing, or addressing information. Each device in UMI networking has a unique identifier including 8 bytes (64 bits). The identifier may uniquely identify a device, and therefore the identifier is referred to as a device address. The device address includes a vendor identifier (Vendor ID) and a device identifier (Device ID). The vendor ID includes 16 characters. The vendor ID need to be registered with and applied for from a UMI organization. The device ID is assigned by a device manufacturer during UMI device manufacturing, and needs to be unique.

A message structure of the device address addressing information is shown in Table 5.

Table 5

| Location | Field segment | Name | Description |
|---|---|---|---|
| 0 | 31:0 | Destination Address Low | Bits [31:0] of a destination address |
| 1 | 31:0 | Destination Address High | Bits [63:32] of the destination address |
| 2 | 31:0 | Source Address Low | Bits [31:0] of a source address |
| 3 | 31:0 | Source Address High | Bits [63:32] of the source address |

The destination address is a device address of an intended receiving device. The source address is a device address of a device sending the packet.

In this application, a manner of performing addressing based on the device address addressing information includes: When a device receives a packet carrying the device address addressing information, if a destination address of the packet is a device address of the device, the device is a destination device of the packet. Otherwise, an address table needs to be queried based on the destination address of the packet, and processing is performed based on a query result: (1) If the destination address of the packet is in the address table, and a corresponding port is different from a port that receives the packet, the packet is forwarded from the corresponding port. The address table includes a correspondence between a device address and a forwarding port. (2) If the destination address of the packet is in the address table, but a corresponding port is the same as a port that receives the packet, the destination address of the packet is considered to be among devices connected to the port, and therefore, the destination device has received the packet. In this case, the device needs to discard the packet. (3) If the destination address of the packet is not found in the address table, the device does not know whether there is a port connected to the destination device. In this case, the device needs to flood the packet through all ports except a receiving port.

Step 302: The intermediate device 33 receives the adapter list request.

Step 303: The intermediate device 33 sends the adapter list request.

In step 302 and step 303, for a manner in which the intermediate device 33 forwards the adapter list request, refer to the addressing manner corresponding to the device address addressing information. Details are not described herein again.

Step 304: The destination device 32 receives the adapter list request.

Step 305: The destination device 32 sends an adapter list response.

After receiving the adapter list request, the destination device 32 generates the adapter list response, fills, in the adapter list response, information (including identifiers of adapters) of all adapters that are in an online state and that are of the destination device 32, and then sends the adapter list response based on the address table.

In this application, the adapter list request and the adapter list response may be collectively referred to as an

adapter list message, are used to obtain an adapter list of a specific device on a UMI network, and are usually used to obtain detailed information of the adapters of the device for establishment of a virtual channel.

In a possible implementation, a message structure of the adapter list response is shown in Table 6.

Table 6

| 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|---|---|---|---|---|---|---|---|---|---|---|---|---|---|---|
| Packet header | | | | | | | | | | | | | | | | | | | | | | | | | | | | | | | |

| | | | | | | | | | |
|---|---|---|---|---|---|---|---|---|---|
| Universal field | | | | | | | | | |
| Device address addressing information | | | | | | | | | |
| AdapterID | B | AdapterType | AdapterID | AdpCnt | Command=6 | | | | |
| Padding | B | AdapterType | | | | | | | |
| Padding | B | DownAdapterID | B | DownAdapterID | B | UpAdapterID | UsbAdpCnt | HubID | HubCnt |
| CRC32 | | | | | | | | | |

A plurality of AdapterIDs are identifiers of a plurality of adapters carried in the adapter list response.

Optionally, each field in the message structure of the adapter list response is described in Table 7.

Table 7

| Location (4 bytes) | Field segment | Name | Description |
|---|---|---|---|
| 0 | 31:0 | Packet header | Type: 27<br>Rsp: 1<br>For other field segments, see Table 3. |
| 1 | 31:0 | Universal field | Refer to Table 4. |
| 2-5 | 31:0 | Device address addressing | Refer to Table 5. |
| | ... | Device address addressing | Refer to Table 5. |
| 6 | 7:0 | Command | Device control command number, which is 6 |
| | 11:8 | AdpCnt<br>Adapter Count | Quantity of adapters |
| | 19:12 | AdapterID | Adapter ID |
| | 23:20 | AdapterType<br>Adapter Type | Adapter type<br>0: an audio and video source adapter<br>1: an audio and video sink adapter<br>2: a USB 3 upstream adapter<br>3: a USB 3 downstream adapter<br>0-15: reserved |

(continued)

| Location (4 bytes) | Field segment | Name | Description |
|---|---|---|---|
| | 24 | B<br>Binding | Indicates whether an adapter is bound.<br>0: not bound<br>1: bound |
| | 31:25 | ... | ... |
| | ... | ... | After adapter information is filled, if the information is not 4-byte aligned, padding needs to be performed for 4-byte alignment. |
| | 3:0 | HubCnt<br>Hub Count | Quantity of hubs. Value range: 0-15. |
| | 7:4 | HubID | Hub ID. Value range: 0-15. |
| | 11:8 | UsbAdpCnt<br>USB Adapter Count | Quantity of USB adapters. Value range: 0-15.<br><br>Note: The USB adapter includes one upstream adapter and a plurality of (1-15) downstream adapters. |
| | 15:12 | UpAdapterID (identifier)<br>Up AdapterID | ID of a USB upstream adapter |
| | 16 | B<br>Binding | Indicates whether an adapter is bound.<br>0: not bound<br>1: bound |
| | 20:17 | DownAdapterID<br>Down AdapterID | ID of a USB downstream adapter |
| | | Padding | Padding for 4-byte alignment |
| | 31:0 | CRC32 | Check code |

Step 306: The intermediate device 33 receives the adapter list response.

Step 307: The intermediate device 33 sends the adapter list response.

In step 306 and step 307, for a manner in which the intermediate device 33 forwards the adapter list response, refer to the addressing manner corresponding to the device address addressing information. Details are not described herein again.

Step 308: The initiating device 31 receives the adapter list response.

After the initiating device 31 receives the adapter list response, a sink adapter may be determined among the plurality of adapters, and a virtual channel from the source adapter to the sink adapter may be determined among a plurality of paths included in a topology structure between the source adapter and the sink adapter.

In a possible implementation, the virtual channel is selected for the initiating device 31 based on a network quality-related indicator of a transmission path corresponding to the virtual channel. The network quality-related indicator may include a path length, latency, and the like. For example, selection is performed for the initiating device 31 based on the path length, and a shortest path is preferentially selected to establish the virtual channel.

Optionally, the virtual channel includes a plurality of concatenated virtual shuttles between the source adapter of the initiating device 31 and the sink adapter among the plurality of adapters of the destination device 32. For example, the virtual channel includes a first virtual shuttle between the initiating device 31 and the intermediate device 33, and a second virtual shuttle between the intermediate device 33 and the destination device 32.

Step 309: The initiating device 31 generates a bandwidth application request.

In a possible implementation, a message structure of the bandwidth application request is shown in Table 8.

Table 8

<table>
<tr><td colspan="6">31 30 29 28 27 26 25 24 23 22 21 20 19 18 17 16 15 14 13 12 11 10 9 8 7 6 5 4 3 2 1 0</td></tr>
<tr><td colspan="6">Packet header</td></tr>
<tr><td colspan="6">Universal field</td></tr>
<tr><td colspan="6">Forwarding list addressing information</td></tr>
<tr><td colspan="6">DEST_ADDR[31:0]</td></tr>
<tr><td colspan="6">DEST_ADDR[63:32]</td></tr>
<tr><td colspan="6">SRC_ADDR[31:0]</td></tr>
<tr><td colspan="6">SRC_ADDR[63:32]</td></tr>
<tr><td>Rsvd</td><td>HL</td><td>FLOW_CTRL</td><td>PRIOR</td><td>SRC_AdapterID</td><td>DEST_AdapterID</td></tr>
<tr><td colspan="6">OutStreamBW</td></tr>
<tr><td colspan="6">InStreamBW</td></tr>
<tr><td colspan="6">CRC32</td></tr>
</table>

The initiating device 31 sets a value of OutStreamBW in a message body to an output stream bandwidth required by a service, sets a value of InStreamBW to 0xFFFFFFFF, and updates the message body with an address of a source device, an ID of a source adapter, an address of a destination device, an ID of a destination adapter, a priority (a service priority), and flow control mechanism information.

Optionally, each field in the bandwidth application request is described in Table 9.

Table 9

| Location (4 bytes) | Field segment | Name | Description |
|---|---|---|---|
| 0 | 31:0 | Packet header | Type: 5<br>Rsp: 0<br>For other field segments, see Table 3. |
| 1 | 31:0 | Universal field | Refer to Table 4. |
| N | 31:0 | Forwarding list addressing information | Refer to Table 12. |
| | ... | Forwarding list addressing information | Refer to Table 12. |
| N+1 | 31:0 | DEST_ADDR Destination Address | Lower 32 bits of the address of the destination device (a sink device) |
| N+2 | 31:0 | DEST_ADDR Destination Address | Upper 32 bits of the address of the destination device (the sink device) |
| N+3 | 31:0 | SRC_ADDR Source Address | Lower 32 bits of an address of an initiating device (the source device) |

(continued)

| Location (4 bytes) | Field segment | Name | Description |
|---|---|---|---|
| N+4 | 31:0 | SRC_ADDR Source Address | Upper 32 bits of the address of the initiating device (the source device) |
| N+5 | 7:0 | DEST_AdapterID Destination Adapter | ID of the sink adapter (the ID of the destination adapter, or an identifier of the sink adapter) |
| | 15:8 | SRC_AdapterID Source Adapter Identifier | ID of the source adapter (an ID of an initiating adapter, or an identifier of the source adapter) |
| | 19:16 | PRIOR Priority | Priority |
| | 23:20 | FLOW_CTRL | Flow control mechanism. For details about a value, see 1.5. |
| | 31:24 | Rsvd | Reserved |
| N+6 | 31:0 | OutStreamBW Output Stream BandWidth | Output stream bandwidth. A unit is Mbps.<br>0: indicates that the output stream bandwidth that is applied for is 0, and a virtual channel in an output stream direction needs to be established.<br>0xFFFFFFFF: indicates that the output stream bandwidth does not need to be allocated, and the virtual channel in the output stream direction does not need to be established.<br>0x0-0xEFFFFFFF: indicates that the output stream bandwidth needs to be applied for, and the virtual channel in the output stream direction needs to be established. |
| N+7 | 31:0 | InStreamBW Input Stream BandWidth | Input stream bandwidth. A unit is Mbps.<br>0: indicates that the input stream bandwidth that is applied for is 0, and a virtual channel in an input stream direction needs to be established.<br>0xFFFFFFFF: indicates that the input stream bandwidth does not need to be allocated, and the virtual channel in the input stream direction does not need to be established.<br>0x0-0xEFFFFFFF: indicates that the input stream bandwidth needs to be applied for, and the virtual channel in the input stream direction needs to be established. |
| N+8 | 31:0 | CRC32 | |

Step 310: The initiating device 31 allocates bandwidth to the first virtual shuttle of the virtual channel based on an output stream bandwidth required by an audio and video service stream.

In a possible implementation, step 310 may include the following sub-steps S1 to S7.

S1: The initiating device 31 determines an output port number OutPortID of the bandwidth application request, and checks, based on a routing table, whether the output port number exists in a router forwarding table that corresponds to the audio and video service stream.

When the forwarding list addressing information of the initiating device 31 does not include a port number of an output port through which the initiating device 31 sends a bandwidth application, the initiating device 31 determines, through intra-device addressing, the port number of the output port through which the bandwidth application is sent, namely, a first output stream port number. For example, the initiating device 31 maintains service stream information. The service stream information includes an input port number, the address of the source device, the identifier of the source adapter, the output port number, the address of the destination device, an identifier of the destination adapter, a bandwidth, and the priority. The initiating device 31 queries the output port number, namely, the first output stream port number, in the service stream information by using the address of the source device, the address of the destination device, and the like in

the bandwidth application request. In addition, the first output stream port number is also an output port of the virtual channel of the audio and video service stream on the device.

Optionally, the router forwarding table indicates a forwarding rule of a packet in the device between different virtual shuttles, and one router forwarding table includes one or more forwarding entries (or router forwarding entries). As shown in Table 10, the router forwarding table includes input stream information and output stream information, and a router forwarding entry may be represented by {input stream information|output stream information}. The input stream information includes information about a single input stream node, and the output stream information includes information about one or more output stream nodes. The information about the input stream node mainly describes a port and a virtual shuttle (for example, a port number and a virtual shuttle identifier) that correspond to the input stream, and the information about the output stream node mainly describes related information such as a destination port and a destination virtual shuttle (for example, a port number and a virtual shuttle identifier) for forwarding a packet. A 1st router forwarding entry in Table 10 may be represented as {[0,4] | [2,4]}, where the input stream information includes information [0,4] only of one input stream node, indicating that a packet of the stream is received from a receive buffer of an adapter 4 of a router; and the output stream information includes information [2,4] of one output stream node, indicating that the packet of the stream needs to be forwarded to a virtual shuttle 4 of a port 2. The virtual shuttle identifier in the input stream node information of the input stream information is equivalent to an adapter identifier (AdapterID). The input stream node may also be referred to as an input stream node, and the output stream node may also be referred to as an output stream node.

Table 10

| Input stream information | Output stream information |
|---|---|
| [0,4] | [2,4] |
| [1,n] | [0,4] |
| [2,4] | [0,4] |
| [1,4] | [2,n] |
| [2,n] | [1,4] |

In a multicast scenario, one or more devices under a same destination port receive a stream corresponding to a same virtual shuttle. To facilitate management of the router forwarding table, a multicast count value (ReceiverCount) is added to the output stream node. In this case, the output stream node is represented by a triplet [port number (Port), virtual shuttle identifier (ShuttleID), multicast count value (ReceiverCount)]. The multicast count value indicates a quantity of destination devices, under the output port (or referred to as an output stream port), that receive an audio and video service stream.

S2: If the output port number is in the router forwarding table, the initiating device 31 uses an existing virtual shuttle identifier, increments a corresponding multicast count value by one, and proceeds to S5.

S3: If the output port number is not in the router forwarding table, the initiating device 31 allocates a new virtual shuttle identifier for the output port, and sets a corresponding multicast count value to 1.

S4: Determine whether a current actual available bandwidth meets a requirement. If the requirement is met, the initiating device 31 allocates bandwidth based on the requirement; or if the requirement is not met, the initiating device 31 starts a bandwidth escalation management process.

That the initiating device 31 allocates the bandwidth based on the requirement means: A comparison is performed between a current actual available bandwidth of the output port and the output stream bandwidth required by the audio and video service stream, namely, a first output stream bandwidth, and if the current actual available bandwidth is greater, the requirement is met.

S5: The initiating device 31 records the service stream information, and updates router forwarding table information.

S6: The initiating device 31 compares an actually allocated bandwidth with OutStreamBW in the bandwidth application request. If the actually allocated bandwidth is less than the value of OutStreamBW, the value of OutStreamBW is set to the actually allocated bandwidth; or if the actually allocated bandwidth is not less than the value of OutStreamBW, the value of OutStreamBW remains unchanged.

The value of OutStreamBW is referred to as the first output stream bandwidth.

S7: The initiating device 31 configures a transport layer.

The initiating device 31 delivers information shown in Table 11 to the transport layer.

Table 11

| Management adapter | Transport layer |
|---|---|
| Flow control mechanism | FC_STSH |
| Priority | Priority |
| Flow control buffer | Credit Allocated Shuttle |
| Weight | Weight |
| Input ShuttleID (Shuttle ID of an input stream node) | ShuttleID |
| Output port number | FwPort |
| Output ShuttleID (Shuttle ID of an output stream node) | FwShuttleID |

In a possible implementation of this application, sequence numbers of the foregoing steps do not limit execution steps of the steps. For example, step 310 may be performed after step 309, or may be performed before step 309. In other words, when the bandwidth application request is not generated, the initiating device 31 may perform step 310 by using data related to the bandwidth application request.

Step 311: The initiating device 31 sends the bandwidth application request.

The bandwidth application request includes the first output stream bandwidth. In other words, the value of OutStreamBW in the bandwidth application request is set to the first output stream bandwidth.

In a possible implementation, the initiating device 31 forwards the bandwidth application request based on the forwarding list addressing information of the bandwidth application request.

Optionally, addressing information of the bandwidth application request is the forwarding list addressing information, or is referred to as forwarding list addressing or addressing information. A message structure of the forwarding list addressing information is shown in Table 12.

Table 12

<table>
<tr><th>Location</th><th>Field segment</th><th>Name</th><th>Description</th></tr>
<tr><td rowspan="8">0</td><td>6:0</td><td>Forwarding List Level</td><td>Current level. Range: 1-127.</td></tr>
<tr><td>7</td><td>Rsvd</td><td>Reserved</td></tr>
<tr><td>14:8</td><td>Forwarding List Length</td><td>Length of a forwarding list. Range: 0-126.</td></tr>
<tr><td>15</td><td>Rsvd</td><td>Reserved</td></tr>
<tr><td>19:16</td><td>Level 1 PortID</td><td>Port number of a level 1. Range: 1-15.</td></tr>
<tr><td>23:20</td><td>Level 2 PortID</td><td>Port number of a level 2. Range: 1-15.</td></tr>
<tr><td>27:24</td><td>...</td><td>...</td></tr>
<tr><td>31:28</td><td>...</td><td>...</td></tr>
<tr><td>...</td><td>...</td><td>...</td><td>...</td></tr>
<tr><td rowspan="2">N</td><td>M-1:0</td><td>...<br>Level FL Length PortID</td><td>...<br>Port number of a level FL Length. Range: 1-15.</td></tr>
<tr><td>31:M</td><td>Padding</td><td>Padding. An addressing information part requires 4-byte alignment, and 0 is padded if a length of the addressing information part is insufficient. A padding length ranges from 0 to 28 bits.</td></tr>
</table>

Forwarding List Level of the bandwidth application request indicates the current level, and a corresponding port number in port numbers of levels is a number of a port through which the device sends the bandwidth application request.

Step 312: The intermediate device 33 receives the bandwidth application request.

When receiving the bandwidth application request, the intermediate device 33 records the service stream

information.

Step 313: The intermediate device 33 allocates bandwidth to a second virtual shuttle based on the first output stream bandwidth in response to the bandwidth application request.

If the intermediate device 33 receives a bandwidth application request with a repeated message identifier (tag) from a same source device, and bandwidth is already allocated, the intermediate device 33 directly forwards the bandwidth application request without processing.

For a processing manner of allocating the bandwidth by the intermediate device 33, refer to step 310. Details are not described herein again.

Step 314: The intermediate device 33 sends the bandwidth application request.

The bandwidth application request includes a fourth output stream bandwidth. The fourth output stream bandwidth indicates the intermediate device 33 to set the value of OutStreamBW based on a current actual available bandwidth. The fourth output stream bandwidth may be the same as or different from the first output stream bandwidth.

In a possible implementation, the intermediate device 33 forwards the bandwidth application request based on the forwarding list addressing information of the bandwidth application request.

Optionally, the intermediate device 33 updates the forwarding list addressing information, and sends the bandwidth application request based on updated forwarding list addressing information.

Step 315: The destination device 32 receives the bandwidth application request.

The bandwidth application request includes a fifth output stream bandwidth. The fifth output stream bandwidth indicates an output stream bandwidth to be applied for, which is obtained by setting the value of OutStreamBW by an upper-level device on the virtual channel.

Step 316: The destination device 33 sends a bandwidth application response.

After receiving the bandwidth application request, the destination device 32 records the service stream information, determines, based on the forwarding list addressing information, that the destination device 32 is a destination device of the bandwidth application request, uses an input port of the bandwidth application request as an output port of the bandwidth application response, and sends the bandwidth application response in a forwarding list addressing manner.

In a possible implementation, a message structure of the bandwidth application response is shown in Table 13.

Table 13

| 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|---|---|---|---|---|---|---|---|---|---|---|---|---|---|---|

| |
|---|
| Packet header |
| Universal field |
| Forwarding list addressing information |
| OutStreamBW |
| InStreamBW |
| CRC32 |

Optionally, each field in the bandwidth application response is described in Table 14.

Table 14

| Location (4 bytes) | Field segment | Name | Description |
|---|---|---|---|
| 0 | 31:0 | Packet header | Type: 5<br>Rsp: 1<br>For other field segments, see Table 3. |
| 1 | 31:0 | Universal field | Refer to Table 4. |

(continued)

| Location (4 bytes) | Field segment | Name | Description |
|---|---|---|---|
| N | 31:0 | Forwarding list addressing information | Refer to Table 12. |
| | ... | Forwarding list addressing information | Refer to Table 12. |
| N+1 | 31:0 | OutStreamBW Output Stream Band-Width | Output stream bandwidth. A unit is Mbps. 0: indicates that an output stream bandwidth obtained through an application is 0. 0xFFFFFFFF: indicates that the output stream bandwidth does not need to be allocated. 0x0-0xEFFFFFFF: indicates that the output stream bandwidth obtained through the application is needed. |
| N+2 | 31:0 | InStreamBW Input Stream Band-Width | Input stream bandwidth. A unit is Mbps. 0: indicates that an input stream bandwidth obtained through an application is 0. 0xFFFFFFFF: indicates that the input stream bandwidth does not need to be allocated. 0x0-0xEFFFFFFF: indicates that the input stream bandwidth obtained through the application is needed. |
| N+3 | 31:0 | CRC32 | |

Step 317: The intermediate device 33 receives the bandwidth application response.

Step 318: The intermediate device 33 allocates bandwidth to the second virtual shuttle in response to the bandwidth application response.

In a possible implementation, a manner in which the intermediate device 33 allocates bandwidth in response to the bandwidth application response includes the following sub-steps S1 to S4.

S1: The intermediate device 33 identifies a corresponding virtual shuttle based on Channel ShuttleID and tag in the bandwidth application response.

Channel ShuttleID and tag in the bandwidth application response indicate the second virtual shuttle of the virtual channel.

S2: The intermediate device 33 determines whether the multicast count value of the output stream node is greater than 1. If the multicast count value of the output stream node is greater than 1, S4 is performed; or if the multicast count value of the output stream node is not greater than 1, S3 is performed.

S3: The intermediate device 33 compares an allocated bandwidth with a bandwidth (OutStreamBW) in the bandwidth application response, namely, a sixth output stream bandwidth. If the allocated bandwidth is greater, the intermediate device 33 releases an excess bandwidth, recalculates a weight and a flow control buffer, and delivers updated weight and flow control buffer information to the transport layer.

Optionally, the allocated bandwidth is an output stream bandwidth allocated by the intermediate device 33 to the second virtual shuttle based on the bandwidth application request. The excess bandwidth is a difference obtained by subtracting the bandwidth in the bandwidth application response from the allocated bandwidth.

S4: The intermediate device 33 refreshes a record of the allocated bandwidth.

In a possible embodiment of this application, if the intermediate device 33 receives a bandwidth application response with a repeated tag from a same device, and bandwidth is already allocated, the intermediate device 33 directly forwards the bandwidth application response without processing.

Step 319: The intermediate device 33 sends the bandwidth application response.

In the bandwidth application response sent by the intermediate device 33, values of tag, Channel ShuttleID, and the like are updated. For example, an updated value of Channel ShuttleID in the bandwidth application response is an identifier of the first virtual shuttle.

Step 320: The initiating device 31 receives the bandwidth application response.

Step 321: The initiating device 31 allocates bandwidth to the first virtual shuttle in response to the bandwidth application response.

In a possible implementation, a manner in which the initiating device 31 allocates bandwidth in response to the

bandwidth application response includes the following sub-steps S1 to S4.

S1: The initiating device 31 identifies a corresponding virtual shuttle based on Channel ShuttleID and tag in the bandwidth application response.

Channel ShuttleID and tag in the bandwidth application response indicate the first virtual shuttle of the virtual channel.

S2: The initiating device 31 determines whether the multicast count value of the output stream node is greater than 1. If the multicast count value of the output stream node is greater than 1, S5 is performed; or if the multicast count value of the output stream node is not greater than 1, S3 is performed.

S3: The initiating device 31 compares an allocated bandwidth with the bandwidth (OutStreamBW) in the bandwidth application response, namely, the sixth output stream bandwidth. If the allocated bandwidth is greater, the initiating device 31 releases an excess bandwidth, recalculates the weight and the flow control buffer, and delivers updated weight and flow control buffer information to the transport layer.

Optionally, the allocated bandwidth is an output stream bandwidth allocated by the initiating device 31 to the first virtual shuttle based on the bandwidth application request. The excess bandwidth is a difference obtained by subtracting the bandwidth in the bandwidth application response from the allocated bandwidth.

S4: The initiating device 31 refreshes a record of the allocated bandwidth.

In a possible embodiment of this application, after performing step 321, the initiating device 31 may further perform decision-making on a next operation based on the bandwidth application response. A decision-making policy corresponding to the decision-making may be as follows:

(1) If the bandwidth (namely, the value of OutStreamBW, the sixth output stream bandwidth) in the bandwidth application response is consistent with a service requested bandwidth (namely, the value of OutStreamBW in a sent bandwidth application request, the first output stream bandwidth), audio and video service stream transmission may be started;
(2) if the bandwidth in the bandwidth application response is less than the service requested bandwidth, and this is acceptable for a service, for example, a service requirement can still be met by adjusting a resolution, a color space, a bit depth, or the like, service transmission may be started; or
(3) if the bandwidth in the response message is less than the service requested bandwidth, but this is unacceptable for a service, a bandwidth release procedure is initiated, a second short path is selected for starting the bandwidth application procedure for another time; or
(4) if no path in UMI networking can meet a bandwidth requirement of the current audio and video service stream, an exception is reported.

In a possible embodiment of this application, when the initiating device 31 receives a bandwidth response, and ErrCode is not zero, the initiating device 31 may continue to resend the bandwidth application request based on an original tag. When the initiating device 31 receives the bandwidth response, and ErrCode is not zero, the initiating device 31 may first invoke a bandwidth release procedure, and then use a new tag to send the bandwidth application request.

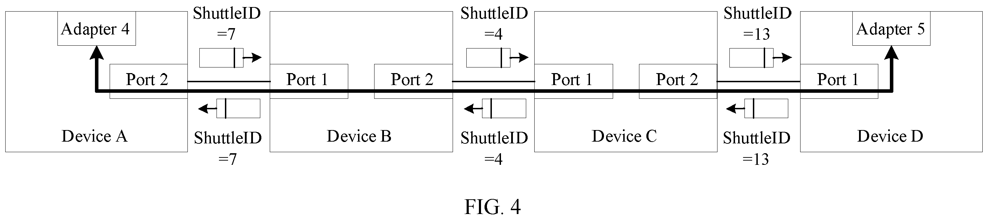

In a possible embodiment of this application, the initiating device 31 and the destination device 32 complete establishment of the virtual channel by using the virtual channel establishment method. FIG. 4 is a diagram of a virtual channel according to this application.

A communication link between the source device 210 and the sink device 220 includes communication links between a plurality of intermediate devices that are between the communication interface 214 and the communication interface 224. For example, the source device 210 is a device A, the sink device 220 is a device D, and the intermediate device includes a device B and a device C. A plurality of virtual shuttles are concatenated between an adapter 4 of the device A and an adapter 5 of the device D to form a virtual channel. The virtual channel includes three virtual shuttles: a virtual shuttle whose virtual shuttle identifier (ShuttleID) is 7 from the device A to the device B, a virtual shuttle whose virtual shuttle identifier is 4 from the device B to the device C, and a virtual shuttle whose virtual shuttle identifier is 13 from the device C to the device D. A port 2 of each device is a downstream port (main downstream port, MDP), a port 1 of each device is an upstream port (main upstream port, MUP), and the downstream port and the upstream port are connected through a connector and a cable.

The virtual channel may be represented by a quadruplet. As shown in FIG. 4, the virtual channel may be represented as (device A, adapter 4, device D, adapter 5).

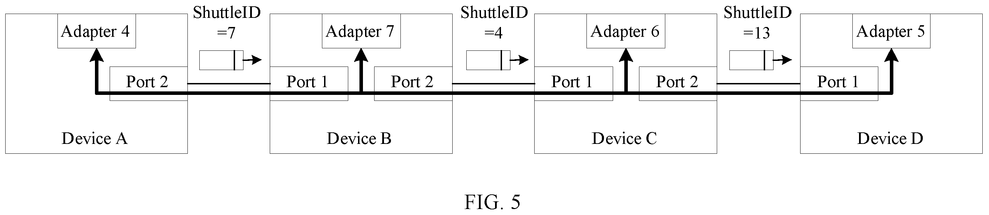

The UMI bus supports a multicast function. Data, an audio and video stream, and the like generated by a same adapter may be transmitted to a plurality of adapters. As shown in FIG. 5, a stream sent by the adapter 4 of the device A is received by an adapter 7 of the device B, an adapter 6 of the device C, and the adapter 5 of the device D. Three corresponding virtual channels are: (device A, adapter 4, device B, adapter 7), (device A, adapter 4, device C, adapter 6), and (device A, adapter 4, device D, adapter 5).

In a possible embodiment of this application, when for an audio and video service stream, for example, a USB

tunnel service, both output stream bandwidth and input stream bandwidth need to be applied for, in addition to allocating output stream bandwidth to the output port, the intermediate device also needs to allocate, to the input port, output stream bandwidth, which corresponds to InStreamBW in the bandwidth application request; and the destination device needs to allocate, to the input port, output stream bandwidth, which corresponds to InStreamBW in the bandwidth application request. A bandwidth allocation rule and procedure are the same as a bandwidth allocation rule and procedure described above.

Based on step 301 to step 321 in the virtual channel establishment method, the initiating device can determine, based on the adapter list response, the plurality of adapters included in the destination device, to identify a virtual channel from the initiating device to the destination device. A device through which the virtual channel passes may be selected based on a requirement. In other words, a transmission path corresponding to the virtual channel may be flexibly determined, preventing the transmission path from depending on a fixed physical connection line. In addition, the bandwidth application request indicates each device on the virtual channel to complete bandwidth allocation for a corresponding virtual shuttle, which implements hierarchical creation of specified virtual shuttles. The audio and video service stream is transmitted between two ports through the virtual shuttle, which decouples transmission of the audio and video service stream from a physical connection manner between the ports, and further improves flexibility of changing the transmission path of the audio and video service stream.

The foregoing describes an overall procedure of the virtual channel establishment method with reference to FIG. 3 to FIG. 5. In complex UMI networking, to avoid a problem that an initiating device sends a bandwidth application request but fails to apply for bandwidth due to competition, among a plurality of devices, for bandwidth of a virtual shuttle that corresponds to an adapter, in an embodiment of this application, the virtual channel establishment method may further include an adapter binding operation. The following describes in detail an implementation of the adapter binding operation according to an embodiment of this application with reference to the accompanying drawings.

The adapter binding operation is to pair two adapters to establish a virtual channel between the two adapters. The two adapters to be bound need to comply with the following rules: an audio transmitting adapter and audio and video receiving adapter, a USB 3 downstream adapter, and a USB 3 upstream adapter.

A bandwidth application operation, namely, generation and sending of a bandwidth application request, need to be initiated by a source device or a USB host device of the audio and video service stream. Therefore, when a sink device or a USB 3 upstream device of the destination device establishes a virtual channel, an adapter binding request need to be initiated to the corresponding source device. In this way, the source device or the USB host device of the audio and video service stream receives the adapter binding request, and then initiates the bandwidth application request, to establish the corresponding virtual channel.

In another scenario, the source device or the USB host device of the audio and video service stream may alternatively actively initiate the adapter binding operation to lock a bandwidth resource of the destination device.

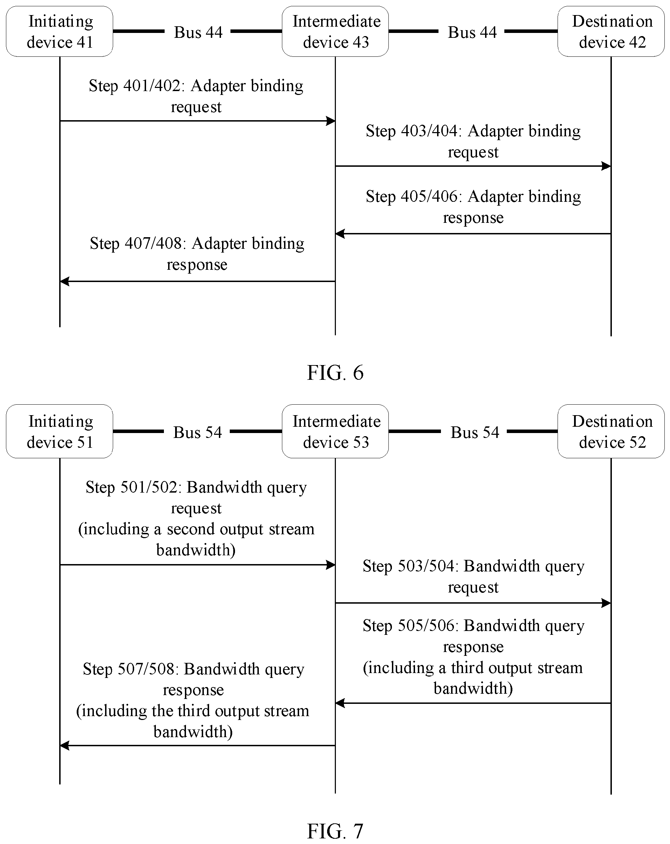

Herein, an example in which the adapter binding operation in this embodiment of this application is performed by the source device 210 and the sink device 220 shown in FIG. 2 is used for description. FIG. 6 is a schematic flowchart of the adapter binding operation according to this application. When the adapter binding operation is initiated by the source device 210 after step 308 shown in FIG. 3, an initiating device 41 is configured to implement a function of the source device 210; or when the adapter binding operation is initiated by a sink device 210 after step 308 shown in FIG. 3, an initiating device 41 is configured to implement a function of the sink device 220. In this embodiment, the initiating device 41 may also be referred to as a source device, an audio and video transmitting end, or an audio and video transmitting device, and a sink device, a display device, an audio and video receiving device, or an audio and video playing device. The destination device 42 may also be referred to as a sink device, a display device, an audio and video receiving device, or an audio and video playing device, and a source device, an audio and video transmitting end, or an audio and video transmitting device. In this embodiment, the initiating device 41 and the destination device 42 are connected through one or more intermediate devices 43 (FIG. 6 shows only one intermediate device 43, but a quantity of intermediate devices is not limited). The initiating device 41, the intermediate device 43, and the destination device 42 are connected through a bus 44. The bus 44 may be a UMI bus.

Refer to FIG. 6. The virtual channel establishment method according to this embodiment includes the following step 401 to step 408.

Step 401: The initiating device 41 sends an adapter binding request.

In a possible implementation, a message structure of the adapter binding request is shown in Table 15.

Table 15

<table>
<tr><td>31</td><td>30</td><td>29</td><td>28</td><td>27</td><td>26</td><td>25</td><td>24</td><td>23</td><td>22</td><td>21</td><td>20</td><td>19</td><td>18</td><td>17</td><td>16</td><td>15</td><td>14</td><td>13</td><td>12</td><td>11</td><td>10</td><td>9</td><td>8</td><td>7</td><td>6</td><td>5</td><td>4</td><td>3</td><td>2</td><td>1</td><td>0</td></tr>
<tr><td colspan="32">Packet header</td></tr>
<tr><td colspan="32">Universal field</td></tr>
<tr><td colspan="32">Device address addressing information</td></tr>
<tr><td colspan="4">DEST_Hub ID</td><td colspan="4">SRC_Hub ID</td><td colspan="8">DEST_AdapterID</td><td colspan="8">SRC_AdapterID</td><td colspan="8">Command=7</td></tr>
<tr><td colspan="32">DEST_ADDR[31:0]</td></tr>
<tr><td colspan="32">DEST_ADDR[63:32]</td></tr>
<tr><td colspan="32">OutStreamBW</td></tr>
<tr><td colspan="32">InStreamBW</td></tr>
<tr><td colspan="32">CRC32</td></tr>
</table>

Optionally, message fields in the adapter binding request are described in Table 16.

Table 16

| Location (4 bytes) | Field segment | Name | Description |
|---|---|---|---|
| 0 | 31:0 | Packet header | Type: 27<br>Rsp: 0<br>For other field segments, see Table 3. |
| 1 | 31:0 | Universal field | Refer to Table 4. |
| 2-5 | 31:0 | Device address addressing information | Refer to Table 5. |
|  | ... | Device address addressing information | Refer to Table 5. |
| 6 | 7:0 | Command | Device control command number, which is 7 |
|  | 15:8 | SRC_AdapterID Source Device AdapterID | Source device adapter ID (an identifier of a source adapter), which is an ID of an audio and video transmitting adapter of a destination device of a message, or an ID of a USB downstream adapter of a destination device of a message. A device address corresponding to the adapter is a destination address defined by a "device address" sub-field. |

(continued)

| Location (4 bytes) | Field segment | Name | Description |
|---|---|---|---|
| | 23:16 | DEST_AdapterID Destination Device AdapterID | Destination device adapter ID (an identifier of a sink adapter), which is an ID of an audio and video receiving adapter of a to-be-bound destination device, or an ID of a USB upstream adapter of a to-be-bound destination device. A device address corresponding to the adapter is DEST_ADD. |
| | 27:24 | SRC_HubID Source Device HubID | Hub ID corresponding to SRC_AdapterID.<br>0x0: invalid value, which indicates that an adapter is not corresponding to a hub.<br>0x1-0xF: indicates a valid hub ID. |
| | 31:28 | DEST_HubID Destination Device HubID | Hub ID corresponding to DEST_AdapterID.<br>0x0: invalid value, which indicates that an adapter is not corresponding to a hub.<br>0x1-0xF: indicates a valid hub ID. |
| 7 | 31:0 | DEST_ADDR[63:32] | Upper 32 bits of an address of the to-be-bound destination device |
| 8 | 31:0 | DEST_ADDR[31:0] | Lower 32 bits of the address of the to-be-bound destination device |
| 9 | 31:0 | OutStreamBW Output Stream Band-Width | Output stream bandwidth.<br>An output stream bandwidth that is adapted to downstream and that corresponds to a host is carried only when the host sends a USB adaptation binding message. In another scenario, an invalid value 0xFFFFFFFF is used by default. |
| 10 | 31:0 | InStreamBW Input Stream Band-Width | Input stream bandwidth.<br>An input stream bandwidth that is adapted to downstream and that corresponds to a host is carried only when the host sends a USB adaptation binding message. In another scenario, the invalid value 0xFFFFFFFF is used by default. |
| 11 | 31:0 | CRC32 | Check code |

In a possible implementation, the initiating device 41 sends the adapter binding request in a device address addressing manner.

Step 402: The intermediate device 43 receives the adapter binding request.

Step 403: The intermediate device 43 sends the adapter binding request.

Step 404: The destination device 42 receives the adapter binding request.

Step 405: The destination device 42 sends an adapter binding response.

In a possible implementation, in addition to sending the adapter binding response, the destination device 42 synchronously records adapter binding information: a device address of a bound initiating device and the identifier of the source adapter.

In a possible embodiment of this application, if an adapter is already bound, a value of ErrCode is set to 0x5 (denying the request), and an adapter binding response message is directly returned.

Step 406: The intermediate device 43 receives the adapter binding response.

Step 407: The intermediate device 43 sends the adapter binding response.

Step 408: The initiating device 41 receives the adapter binding response.

In a possible implementation, the initiating device 41 synchronously records the adapter binding information: a device address of a bound destination device and the identifier of the sink adapter.

The foregoing describes the overall procedure of the virtual channel establishment method with reference to FIG. 3 to FIG. 6. In complex UMI networking, to avoid invalid bandwidth application due to failure of an available bandwidth of a to-be-established virtual channel, specified by sending a bandwidth application request, to meet a bandwidth requirement of an audio and video service stream, in an embodiment of this application, the virtual channel establishment method may further include a bandwidth query operation. The following describes in detail an implementation of the bandwidth query operation according to an embodiment of this application with reference to the accompanying drawings.

The bandwidth query operation is used to query a minimum available bandwidth across all ports on a virtual channel between two devices on a UMI network. The bandwidth query operation, namely, generation and sending of the bandwidth application request, need to be initiated by a device where an audio and video transmitting adapter that sends the audio and video service stream is located, or by a device where a USB tunnel adapter that is connected to a USB host in a USB service stream is located.

Herein, an example in which the bandwidth query operation in this embodiment of this application is performed by the source device 210 and the sink device 220 shown in FIG. 2 is used for description. FIG. 7 is a schematic flowchart of the bandwidth query operation according to this application. An initiating device 51 is configured to implement a function of the source device 210, and a destination device 52 is configured to implement a function of the sink device 220. In this embodiment, the initiating device 51 may also be referred to as a source device, an audio and video transmitting end, or an audio and video transmitting device, and the destination device 52 may also be referred to as a sink device, a display device, an audio and video receiving device, or an audio and video playing device. In this embodiment, the initiating device 51 and the destination device 52 are connected through one or more intermediate devices 53 (FIG. 7 shows only one intermediate device 53, but a quantity of intermediate devices is not limited). The initiating device 51, the intermediate device 53, and the destination device 52 are connected through a bus 54. The bus 54 may be a UMI bus.

Refer to FIG. 7. The bandwidth query operation according to this embodiment includes the following step 501 to step 508.

Step 501: The initiating device 51 sends a bandwidth query request.

The bandwidth query request includes a second output stream bandwidth, and the second output stream bandwidth indicates an available output stream bandwidth of an output port of the initiating device 51.

In a possible implementation, a message structure of the bandwidth application request is shown in Table 17.

Table 17

<table>
<tr><td>31</td><td>30</td><td>29</td><td>28</td><td>27</td><td>26</td><td>25</td><td>24</td><td>23</td><td>22</td><td>21</td><td>20</td><td>19</td><td>18</td><td>17</td><td>16</td><td>15</td><td>14</td><td>13</td><td>12</td><td>11</td><td>10</td><td>9</td><td>8</td><td>7</td><td>6</td><td>5</td><td>4</td><td>3</td><td>2</td><td>1</td><td>0</td></tr>
<tr><td colspan="32">Packet header</td></tr>
<tr><td colspan="32">Universal field</td></tr>
<tr><td colspan="32">Forwarding list addressing information</td></tr>
<tr><td colspan="32">OutStreamBW</td></tr>
<tr><td colspan="32">InStreamBW</td></tr>
<tr><td colspan="32">CRC32</td></tr>
</table>

Optionally, message fields in the bandwidth query request are described in Table 18.

Table 18

| Location (4 bytes) | Field segment | Name | Description |
|---|---|---|---|
| 0 | 31:0 | Packet header | Type: 4<br>Rsp: 0<br>For other field segments, see Table 3. |
| 1 | 31:0 | Universal field | Refer to Table 4. |
| N | 31:0 | Forwarding list addressing information | Refer to Table 10. |
| | ... | Forwarding list addressing information | Refer to Table 10. |
| N+1 | 31:0 | OutStreamBW (Out Stream BandWidth) | Indicates an output stream bandwidth. A valid value range is [0, 0xFFFFFFFF).<br>An initial value is 0xFFFFFFFF. |

(continued)

| Location (4 bytes) | Field segment | Name | Description |
|---|---|---|---|
| N+2 | 31:0 | InStreamBW (In Stream Band-Width) | Indicates an input stream bandwidth. A valid value range is [0, 0xFFFFFFFF). An initial value is 0xFFFFFFFF. |
| N+3 | 31:0 | CRC32 | |

In a possible implementation, the initiating device 51 sends the bandwidth query request in a forwarding list addressing manner. In the sent bandwidth query request, a value of OutStreamBW is set to the second output stream bandwidth.

Step 502: The intermediate device 53 receives the bandwidth query request.

In a possible implementation, after receiving the bandwidth query request, the intermediate device 53 performs the following steps S1 to S3 to update the bandwidth query request.

S1: The intermediate device 53 compares an available output stream bandwidth of an input port with InStreamBW in a message, and updates, with a smaller value, the InStreamBW field in a message body.

The input port is a port through which the intermediate device 53 receives the bandwidth query request. Updating, with the smaller value, the InStreamBW field in the message body means that the InStreamBW field in bandwidth query request is set to the smaller value.

S2: The intermediate device 53 extracts a corresponding output port number from the forwarding list addressing information.

The intermediate device 53 extracts a corresponding output port number OutPortID from the forwarding list addressing information based on a value of FL Level. FL Level indicates a level at which a current device is located, with the source device as an origin.

S3: The intermediate device 53 compares an available output stream bandwidth of an output port with OutStreamBW in the message, and updates, with a smaller value, the OutStreamBW field in the message body.

The output port corresponds to the output port number OutPortID.

Step 503: The intermediate device 53 sends the bandwidth query request.

In a possible implementation, the intermediate device 53 forwards the bandwidth query request in the forwarding list addressing manner.

Step 504: The destination device 52 receives the bandwidth query request.

In a possible implementation, after receiving the bandwidth query request, the destination device 52 performs the following steps S1 to S3.

S1: The destination device 52 compares the available output stream bandwidth of the input port with InStreamBW in the message, and updates, with a smaller value, the InStreamBW field in a message body (bandwidth query response).

S2: The destination device 52 determines, based on FL Level=FL Length+1, that the destination device 52 is a destination device.

S3. The destination device 52 uses the bandwidth query request as an output port of the bandwidth query response.

In a possible embodiment of this application, when the destination device 52 receives a bandwidth query request message, and when the port is in a link configuration or link training state, ErrCode needs to be set to 0x1(Busy) to directly return the bandwidth query response. In addition, when a response is returned upon an exception, PortID in the forwarding list corresponding to FL Level needs to be set to 0.

Step 505: The destination device 52 sends the bandwidth query response.

The bandwidth query response includes a third output stream bandwidth indicating a minimum available output stream bandwidth across all ports through which the virtual channel passes. In other words, a value of OutStreamBW in the bandwidth query response is set to the third output stream bandwidth.

In a possible implementation, a message structure of the bandwidth application response is shown in Table 19.

Table 19

| 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|---|---|---|---|---|---|---|---|---|---|---|---|---|---|---|
| Packet header | | | | | | | | | | | | | | | | | | | | | | | | | | | | | | | |
| Universal field | | | | | | | | | | | | | | | | | | | | | | | | | | | | | | | |
| Forwarding list addressing | | | | | | | | | | | | | | | | | | | | | | | | | | | | | | | |
| OutStreamBW | | | | | | | | | | | | | | | | | | | | | | | | | | | | | | | |
| InStreamBW | | | | | | | | | | | | | | | | | | | | | | | | | | | | | | | |
| CRC32 | | | | | | | | | | | | | | | | | | | | | | | | | | | | | | | |

Optionally, for descriptions of each field in the bandwidth query response, refer to Table 20.

Table 20

| Location (4 bytes) | Field segment | Name | Description |
|---|---|---|---|
| 0 | 31:0 | Packet header | Type: 4<br>Rsp: 1<br>For other field segments, see Table 3. |
| 1 | 31:0 | Universal field | Refer to Table 4. |
| N | 31:0 | Forwarding list addressing | Refer to Table 10. |
| | ... | Forwarding list addressing | Refer to Table 10. |
| N+1 | 31:0 | OutStreamBW (Out Stream BandWidth) | Indicates a minimum available output stream bandwidth across all ports on the virtual channel. A valid value range is [0, 0xFFFFFFFF). |
| N+2 | 31:0 | InStreamBW (In Stream BandWidth) | Indicates a minimum available input stream bandwidth across all ports on the virtual channel. A valid value range is [0, 0xFFFFFFFF). |
| N+n*2 | 31:0 | CRC32 | |

Step 506: The intermediate device 53 receives the bandwidth query response.

Step 507: The intermediate device 53 sends the bandwidth query response.

Step 508: The initiating device 51 receives the bandwidth query response.

The bandwidth query response includes the third output stream bandwidth.

In a possible embodiment of this application, after receiving the bandwidth query response, the initiating device 51 performs comprehensive decision-making based on the bandwidth query response. A decision-making policy of the comprehensive decision-making may be as follows:

(1) If an available bandwidth ≥ an expected bandwidth, a bandwidth application procedure is started and a bandwidth application request is sent, where the expected bandwidth is a bandwidth required by the audio and video service stream.

(2) If an available bandwidth < an expected bandwidth:

(a) if this is acceptable for a service, for example, if a requirement of the audio and video service stream can still be met by adjusting a resolution, a color space, and a bit depth, the bandwidth application process is started;

(b) if this is unacceptable for a service, another path is selected for starting the bandwidth query operation for another time; or

(c) if no path in the UMI networking can meet a bandwidth requirement of the current audio and video service stream, an exception is reported.

It may be understood that, to implement functions in the foregoing embodiments, the source device and the sink device include corresponding hardware structures and/or software modules for performing the functions. A person skilled in the art should be easily aware that, in this application, the units and method steps in the examples described with reference to embodiments disclosed in this application can be implemented by using hardware or a combination of hardware and computer software. Whether a function is performed by hardware or hardware driven by computer software depends on particular application scenarios and design constraint conditions of the technical solutions.

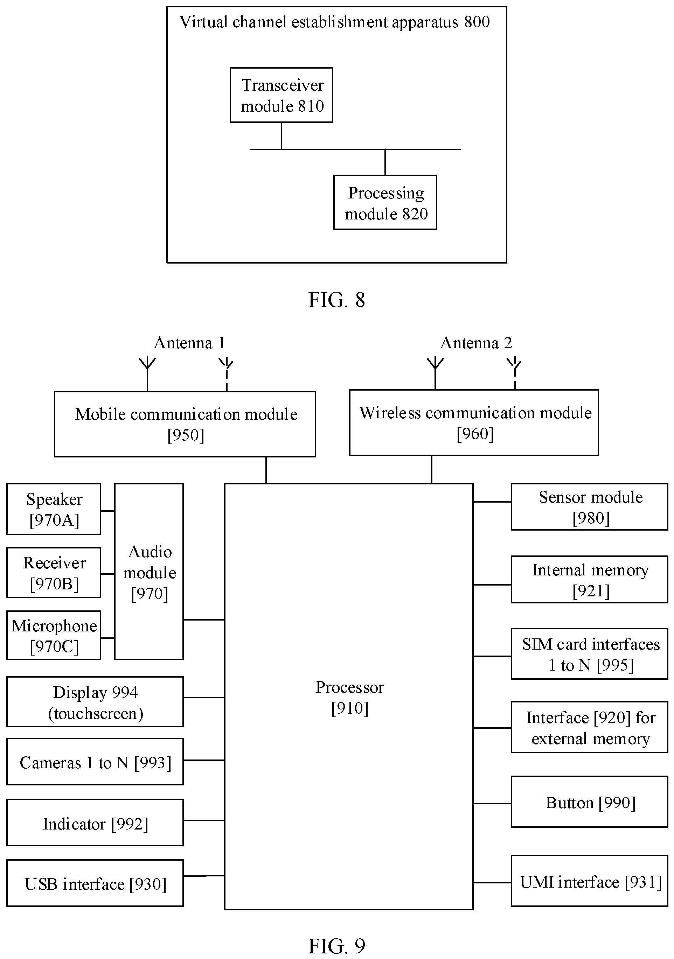

The foregoing describes in detail the virtual channel establishment method according to this embodiment with reference to FIG. 1 to FIG. 7. The following describes a virtual channel establishment apparatus according to an embodiment with reference to FIG. 8.

FIG. 8 is a diagram of a structure of the virtual channel establishment apparatus according to this application. The virtual channel establishment apparatus 800 may be configured to implement a function of any device in the foregoing method embodiments, and therefore can also achieve beneficial effects of the foregoing method embodiments. In this embodiment, the virtual channel establishment apparatus 800 may be the set-top box 110, the smart television 120, or any display device shown in FIG. 1, or may be the source device 210 or the sink device 220 shown in FIG. 2, or may be a multimedia device or a display device according to a subsequent embodiment. It should be understood that the virtual channel establishment apparatus 800 may also be a module (for example, a chip) used in any one of the foregoing devices.

As shown in FIG. 8, the virtual channel establishment apparatus 800 includes a transceiver module 810 and a processing module 820. The transceiver module 810 and the processing module 820 may collaboratively implement the steps in the foregoing method embodiments. For more detailed descriptions of the transceiver module 810 and the processing module 820, directly refer to related descriptions of the devices in the method embodiments shown in the foregoing accompanying drawings. Details are not described herein again.

When the virtual channel establishment apparatus 800 implements, by using software, the virtual channel establishment method shown in any one of the foregoing accompanying drawings, the virtual channel establishment apparatus 800 and units thereof may also be software modules. A processor invokes the software modules to implement the foregoing virtual channel establishment method. The processor may be a central processing unit (central processing unit, CPU), an application-specific integrated circuit (application-specific integrated circuit, ASIC) implementation, or a programmable logic device (programmable logic device, PLD). The PLD may be a complex programmable logic device (complex programmable logic device, CPLD), a field programmable gate array (field programmable gate array, FPGA), generic array logic (generic array logic, GAL), or any combination thereof.

It may be understood that the virtual channel establishment apparatus shown in FIG. 8 is merely an example according to this embodiment. The virtual channel establishment apparatus may include more or fewer units based on different audio and video service stream transmission processes. This is not limited in this application.

When the virtual channel establishment apparatus 800 is implemented by using hardware, the hardware may be implemented by using a processor or a chip system. The chip system includes one or more chips, and each chip includes an interface circuit and a control circuit. The interface circuit is configured to: receive data from a device other than the chip, and transmit the data to the control circuit, or send data from the control circuit to a device other than the chip. The control circuit and the interface circuit are configured to implement, by using a logic circuit or by executing code instructions, the method according to any one of the possible implementations of the foregoing embodiments. For beneficial effects, refer to descriptions of any aspect of foregoing embodiments. Details are not described herein again.

It may be understood that the processor in the embodiments of this application may be a CPU, or may be another general-purpose processor, a digital signal processor (digital signal processor, DSP), an ASIC, an FPGA or another programmable logic device, a transistor logic device, a hardware component, or any combination thereof. The general-purpose processor may be a microprocessor, or may be any conventional processor.

In addition, the virtual channel establishment apparatus 800 shown in FIG. 8 may also be implemented by using a multimedia device. FIG. 9 is a diagram of a structure of the multimedia device according to this application. The multimedia device includes a processor 910, an interface 920 for external memory, an internal memory 921, a universal serial bus (universal serial bus, USB) interface 930, a UMI interface 931, an antenna 1, an antenna 2, a mobile communication module 950, a wireless communication module 960, an audio module 970, a loudspeaker 970A, a receiver 970B, a microphone 970C, a sensor module 980, a button 990, an indicator 992, a camera 993, a display 994, and subscriber identity module (subscriber identity module, SIM) card interfaces 1 to N 995.

The sensor module 980 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure shown in this embodiment does not constitute a specific limitation on the multimedia device. In some other embodiments, the multimedia device may include more or fewer components than those shown in the figure, or some components may be combined, or some components may be split, or different component arrangements may be used. The components shown in the figure may be implemented by using hardware, software, or a combination of software and hardware.

The multimedia device shown in FIG. 9 may be any device in FIG. 1, or the source device or the sink device in a subsequent embodiment.

The processor 910 may include one or more processing units. For example, the processor 910 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the multimedia device. The controller may generate an operation control signal based on an instruction operation code and a time sequence signal, to complete control of instruction reading and instruction execution.

A memory may be further disposed in the processor 910, and is configured to store instructions and data. In some embodiments, the memory in the processor 910 is a cache memory. The memory may store instructions or data just used or cyclically used by the processor 910. If the processor 910 needs to use the instructions or the data again, the processor may directly invoke the instructions or the data from the memory. This avoids repeated access and reduces waiting time of the processor 910, thereby improving system efficiency.

In some embodiments, the processor 910 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a USB interface, a UMI interface, or the like.

It may be understood that an interface connection relationship between the modules shown in this embodiment is merely an example for description, and does not constitute a limitation on the structure of the multimedia device. In some other embodiments, the multimedia device may alternatively use an interface connection manner different from that in the foregoing embodiment, or use a combination of a plurality of interface connection manners.

A wireless communication function of the multimedia device may be implemented by using the antenna 1, the antenna 2, the mobile communication module 950, the wireless communication module 960, the modem processor, the baseband processor, and the like. In some embodiments, in the multimedia device, the antenna 1 and the mobile communication module 950 are coupled, and the antenna 2 and the wireless communication module 960 are coupled, so that the multimedia device can communicate with a network and another device by using a wireless communication technology.

A wired communication function of the multimedia device may be implemented through the USB interface 930 or the UMI interface 931. For example, the multimedia device receives or sends a video stream, an AVP packet, and the like through a bus connected to the UMI interface 931.

The multimedia device implements a display function by using the GPU, the display 994, the application processor, and the like. The GPU is a microprocessor for image processing, and is connected to the display 994 and the application processor. The GPU is configured to: perform mathematical and geometric computation, and render an image. The processor 910 may include one or more GPUs that execute program instructions to generate or change display information.

The display 994 is configured to display an image, a video, and the like. The display 994 includes a display panel.

The multimedia device may implement a photographing function by using the ISP, the camera 993, the video codec, the GPU, the display 994, the application processor, and the like. The ISP is configured to process data fed back by the camera 993. The camera 993 is configured to capture a still image or a video. In some embodiments, the multimedia device may include one or N cameras 993, where N is a positive integer greater than 1.

In this embodiment, the display 994, the video codec, the GPU, the display 994, the application processor, and the like may also be collectively referred to as a display unit of the multimedia device, and are configured to process and display a received multimedia data stream (for example, a video stream).

The interface 920 for external memory may be configured to connect to an external storage card, for example, a microSD card, to extend a storage capability of the multimedia device. The external storage card communicates with the processor 910 through the interface 920 for external memory, to implement a data storage function. For example, files such as music and videos are stored in the external storage card.

The internal memory 921 may be configured to store computer-executable program code. The executable program code includes instructions. The processor 910 runs the instructions stored in the internal memory 921, to perform various function applications and data processing of the multimedia device. For example, in this embodiment of this application, the processor 910 may execute the instructions stored in the internal memory 921. The internal memory 921 may include a program storage area and a data storage area.

The program storage area may store an operating system, an application required by at least one function (for example, a sound playing function or an image playing function), and the like. The data storage area may store data (for example, audio data and a phone book) created when the multimedia device is used, and the like. In addition, the internal memory 921 may include a high-speed random access memory, and may further include a nonvolatile memory, for example, at least one magnetic disk storage device, a flash memory device, or a universal flash storage (universal flash storage, UFS).

The multimedia device may implement an audio function, for example, music playing or recording, through the audio module 970, the loudspeaker 970A, the receiver 970B, the microphone 970C, the application processor, and the like.

The button 990 includes a power button, a volume button, and the like. The button 990 may be a mechanical button, or may be a touch button. The indicator 992 may be an indicator light, and may be configured to indicate a charging status and a power change, or may be configured to indicate a message, a missed call, a notification, and the like.

The method steps in embodiments of this application may alternatively be implemented by the processor executing software instructions. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in the ASIC. In addition, the ASIC may be located in a network device or a terminal device. Certainly, the processor and the storage medium may alternatively exist in a video processing device and the multimedia device as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, all or some of the procedures or functions in embodiments of this application are performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

**1.** A virtual channel establishment method, wherein the method comprises:

sending an adapter list request;
receiving an adapter list response, wherein the adapter list response comprises identifiers of a plurality of adapters comprised in the destination device;
allocating bandwidth to a first virtual shuttle of a virtual channel based on an output stream bandwidth required by an audio and video service stream, wherein the virtual channel comprises a plurality of concatenated virtual shuttles between a source adapter of an initiating device and a sink adapter among the plurality of adapters of the

destination device, and the virtual shuttle is used to transmit an audio and video service stream over a link between two ports;
sending a bandwidth application request, wherein the bandwidth application request comprises a first output stream bandwidth, the bandwidth application request indicates a next-level device on the virtual channel to allocate bandwidth to a second virtual shuttle based on the first output stream bandwidth, and the second virtual shuttle is a next-level virtual shuttle of the first virtual shuttle; and
receiving a bandwidth application response.

2. The method according to claim 1, wherein the method further comprises:

determining the sink adapter among the plurality of adapters; and
determining, among a plurality of paths comprised in a topology structure between the source adapter and the sink adapter, the virtual channel from the source adapter to the sink adapter.

3. The method according to claim 1 or 2, wherein after receiving the adapter list response, the method further comprises:

sending an adapter binding request, wherein the adapter binding request comprises an identifier of the sink adapter; and
receiving an adapter binding response, wherein the adapter binding response indicates that the sink adapter is bound.

4. The method according to any one of claims 1 to 3, wherein the method further comprises:

sending a bandwidth query request, wherein the bandwidth query request comprises a second output stream bandwidth, and the second output stream bandwidth indicates an available output stream bandwidth of an output port of the initiating device; and
receiving a bandwidth query response, wherein the bandwidth query response comprises a third output stream bandwidth, and the third output stream bandwidth indicates a minimum available output stream bandwidth across all ports through which the virtual channel passes.

5. The method according to claim 4, wherein sending the bandwidth application request comprises:
sending the bandwidth application request when the third output stream bandwidth is greater than or equal to the required output stream bandwidth.

6. The method according to claim 4, wherein the method further comprises:
switching the virtual channel between the source adapter and the sink adapter when the third output stream bandwidth is less than the required output stream bandwidth.

7. The method according to claim 6, wherein the method further comprises:
reducing a specification of the audio and video service stream when the third output stream bandwidth is less than the required output stream bandwidth, wherein the specification comprises a resolution, a color space, and/or a bit depth.

8. A virtual channel establishment method, wherein the method comprises:

receiving a bandwidth application request, wherein the bandwidth application request comprises a first output stream bandwidth;
allocating bandwidth to a second virtual shuttle based on the first output stream bandwidth in response to the bandwidth application request, wherein the second virtual shuttle is a next-level virtual shuttle of a first virtual shuttle corresponding to an identifier of the first virtual shuttle on a virtual channel, the virtual channel comprises a plurality of concatenated virtual shuttles between a source adapter of an initiating device and a sink adapter among a plurality of adapters of a destination device, and the virtual shuttle is used to transmit an audio and video service stream over a link between two ports;
sending the bandwidth application request, wherein the bandwidth application request comprises a fourth output stream bandwidth, the bandwidth application request indicates a next-level device on the virtual channel to allocate bandwidth to a third virtual shuttle based on the fourth output stream bandwidth, and the third virtual shuttle is a next-level virtual shuttle of the second virtual shuttle;
receiving a bandwidth application response; and
sending the bandwidth application response.

**9.** A virtual channel establishment method, wherein the method comprises:

receiving an adapter list request;
sending an adapter list response, wherein the adapter list response comprises identifiers of a plurality of adapters comprised in a destination device;
receiving a bandwidth application request, wherein the bandwidth application request comprises a fifth output stream bandwidth; and
returning a bandwidth application response, wherein the bandwidth application response comprises a sixth output stream bandwidth, and the sixth output stream bandwidth indicates an output stream bandwidth obtained through an application.

**10.** The method according to claim 9, wherein the method further comprises:

receiving an adapter binding request, wherein the adapter binding request comprises an identifier of a sink adapter among a plurality of adapters; and
sending an adapter binding response, wherein the adapter binding response indicates that the sink adapter is bound.

**11.** The method according to claim 9 or 10, wherein the method further comprises:

receiving a bandwidth query request; and
sending a bandwidth query response, wherein the bandwidth query response comprises a third output stream bandwidth, and the third output stream bandwidth indicates a minimum available output stream bandwidth across all ports through which the virtual channel passes.

**12.** The method according to claim 9, wherein before receiving the bandwidth application request, the method further comprises:

sending an adapter binding request, wherein the adapter binding request comprises an identifier of the source adapter; and
receiving an adapter binding response, wherein the adapter binding response indicates the source device to send the bandwidth application request to the sink device.

**13.** A virtual channel establishment apparatus, comprising:

a transceiver module, configured to send an adapter list request, wherein
the transceiver module is further configured to receive an adapter list response, and the adapter list response comprises identifiers of a plurality of adapters comprised in the destination device; and
a processing module, configured to allocate bandwidth to a first virtual shuttle of a virtual channel based on an output stream bandwidth required by an audio and video service stream, wherein the virtual channel comprises a plurality of concatenated virtual shuttles between a source adapter of an initiating device and a sink adapter among the plurality of adapters of the destination device, and the virtual shuttle is used to transmit the audio and video service stream over a link between two ports; and
the transceiver module is further configured to send a bandwidth application request, the bandwidth application request comprises a first output stream bandwidth, the bandwidth application request indicates a next-level device on the virtual channel to allocate bandwidth to a second virtual shuttle based on the first output stream bandwidth, and the second virtual shuttle is a next-level virtual shuttle of the first virtual shuttle; and
the transceiver module is further configured to receive a bandwidth application response.

**14.** A virtual channel establishment apparatus, comprising:

a transceiver module, configured to receive a bandwidth application request, wherein the bandwidth application request comprises a first output stream bandwidth; and
a processing module, configured to allocate bandwidth to a second virtual shuttle based on the first output stream bandwidth in response to the bandwidth application request, wherein the second virtual shuttle is a next-level virtual shuttle of a first virtual shuttle corresponding to an identifier of the first virtual shuttle on a virtual channel, the virtual channel comprises a plurality of concatenated virtual shuttles between a source adapter of an initiating device and a sink adapter among a plurality of adapters of a destination device, and the virtual shuttle is used to

transmit an audio and video service stream over a link between two ports; and
the transceiver module is further configured to send the bandwidth application request, the bandwidth application request comprises a fourth output stream bandwidth, the bandwidth application request indicates a next-level device on the virtual channel to allocate bandwidth to a third virtual shuttle based on the fourth output stream bandwidth, and the third virtual shuttle is a next-level virtual shuttle of the second virtual shuttle;
the transceiver module is further configured to receive a bandwidth application response; and
the transceiver module is further configured to send the bandwidth application response.

**15.** A virtual channel establishment apparatus, comprising:

a transceiver module, configured to receive an adapter list request, wherein
the transceiver module is further configured to send an adapter list response, and the adapter list response comprises identifiers of a plurality of adapters comprised in a destination device;
the transceiver module is further configured to receive a bandwidth application request, and the bandwidth application request comprises a fifth output stream bandwidth; and
the transceiver module is further configured to return a bandwidth application response, the bandwidth application response comprises a sixth output stream bandwidth, and the sixth output stream bandwidth indicates an output stream bandwidth obtained through an application.

**16.** A multimedia device, comprising a transceiver and a processor, wherein

the processor is configured to process an audio and video service stream;
the processor is configured to receive and send the audio and video service stream; and
the transceiver and the processor are configured to collaboratively perform the method according to any one of claims 1 to 7 or the method according to claim 8.

**17.** A multimedia device, comprising a transceiver and a processor, wherein

the processor is configured to process an audio and video service stream;
the processor is configured to receive and send the audio and video service stream; and
the display unit, the memory, the transceiver, and the processor are configured to collaboratively perform the method according to any one of claims 9 to 12.

**18.** A readable storage medium, wherein the readable storage medium comprises a computer program or instructions, and when the computer program or the instructions are run on a computer, the computer is enabled to perform operation steps of the method according to any one of claims 1 to 7, operation steps of the method according to claim 8, or operation steps of the method according to any one of claims 9 to 12.

**19.** A computer program product, wherein the computer program product comprises a computer program or instructions, and when the computer program or the instructions are run on a computer, the computer is enabled to perform operation steps of the method according to any one of claims 1 to 7, operation steps of the method according to claim 8, or operation steps of the method according to any one of claims 9 to 12.

Audio and video playing device 124
Audio and video playing device 123
Roof
Bus 125
Room 2
Audio and video playing device 122
Room 1
Smart television 120
Audio and video playing device 121
Set-top box 110
Network cable
Network device 131
Server 130

FIG. 1

Source device 210
Data source 211
Preprocessing module 212
Audio and video signal
UMI controller
Audio and video transmitting adapter 213
Communication interface 214
UMI bus
Sink device 220
UMI controller
Communication interface 224
Audio and video receiving adapter 223
Audio and video signal
Post-processing module 222
Audio and video playing unit 221

FIG. 2

Initiating device 31
Bus 34
Intermediate device 33
Bus 34
Destination device 32
Step 301/302: Adapter list request
Step 303/304: Adapter list request
Step 305/306: Adapter list response
Step 307/308: Adapter list response
Step 309: Generate a bandwidth application request
Step 310: Allocate bandwidth to a first virtual shuttle of a virtual channel based on an output stream bandwidth required by an audio and video service stream
Step 311/312: Bandwidth application request (including a first output stream bandwidth)
Step 313: Allocate bandwidth to a second virtual shuttle based on the first output stream bandwidth in response to the bandwidth application request
Step 314/315: Bandwidth application request (including a fourth output stream bandwidth)
Step 316/317: Bandwidth application response (including a sixth output stream bandwidth)
Step 318: Allocate bandwidth to the second virtual shuttle in response to the bandwidth application response
Step 319/320: Bandwidth application response (including the sixth output stream bandwidth)
Step 321: Allocate bandwidth to the first virtual shuttle in response to the bandwidth application response


FIG. 3

Device A
Adapter 4
Port 2
ShuttleID =7
ShuttleID =7
Device B
Port 1
Port 2
ShuttleID =4
ShuttleID =4
Device C
Port 1
Port 2
ShuttleID =13
ShuttleID =13
Device D
Port 1
Adapter 5

FIG. 4

Adapter 4
Port 2
Device A
ShuttleID =7
Adapter 7
Port 1
Port 2
Device B
ShuttleID =4
Adapter 6
Port 1
Port 2
Device C
ShuttleID =13
Adapter 5
Port 1
Device D

FIG. 5

Initiating device 41
Bus 44
Intermediate device 43
Bus 44
Destination device 42
Step 401/402: Adapter binding request
Step 403/404: Adapter binding request
Step 405/406: Adapter binding response
Step 407/408: Adapter binding response
Initiating device 51
Bus 54
Intermediate device 53
Bus 54
Destination device 52
Step 501/502: Bandwidth query request (including a second output stream bandwidth)
Step 503/504: Bandwidth query request
Step 505/506: Bandwidth query response (including a third output stream bandwidth)
Step 507/508: Bandwidth query response (including the third output stream bandwidth)

FIG. 6

FIG. 7

Virtual channel establishment apparatus 800
Transceiver module 810
Processing module 820

FIG. 8

Antenna 1
Antenna 2
Mobile communication module [950]
Wireless communication module [960]
Speaker [970A]
Receiver [970B]
Microphone [970C]
Audio module [970]
Display 994 (touchscreen)
Cameras 1 to N [993]
Indicator [992]
USB interface [930]
Processor [910]
Sensor module [980]
Internal memory [921]
SIM card interfaces 1 to N [995]
Interface [920] for external memory
Button [990]
UMI interface [931]

FIG. 9

## INTERNATIONAL SEARCH REPORT

International application No.
**PCT/CN2023/133801**

**A. CLASSIFICATION OF SUBJECT MATTER**

H04L 65/752(2022.01)i

According to International Patent Classification (IPC) or to both national classification and IPC

**B. FIELDS SEARCHED**

Minimum documentation searched (classification system followed by classification symbols)

IPC:H04L,H04N,G06F

Documentation searched other than minimum documentation to the extent that such documents are included in the fields searched

Electronic data base consulted during the international search (name of data base and, where practicable, search terms used)

CNTXT, ENTXT, VEN, WPABS, CNKI: 虚拟通道, 通路, 路径, 线路, 适配器, 列表, 标识, 标志, 出流带宽, 分配, 带宽, 音视频, 音频, 视频, 多媒体, 级联, 下一级, vitrual channel, vitrual path, virtual lane, virtual line, adapter, list, ID, ShuttleID, OutStreamBW, allocat+, bandwidth, audio-video, multimedia, cascade, next level, UMI, WWPN

**C. DOCUMENTS CONSIDERED TO BE RELEVANT**

| Category* | Citation of document, with indication, where appropriate, of the relevant passages | Relevant to claim No. |
|---|---|---|
| A | US 2006174087 A1 (HITACHI, LTD.) 03 August 2006 (2006-08-03)<br>entire document | 1-19 |
| A | CN 101257454 A (BEIJING STAR-NET RUIJIE NETWORKS CO., LTD.) 03 September 2008 (2008-09-03)<br>entire document | 1-19 |
| A | CN 113940044 A (CITRIX SYSTEMS, INC.) 14 January 2022 (2022-01-14)<br>entire document | 1-19 |
| A | US 7209489 B1 (ADVANCED MICRO DEVICES INC.) 24 April 2007 (2007-04-24)<br>entire document | 1-19 |

☐ Further documents are listed in the continuation of Box C.　☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **17 June 2024** | **18 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/133801**

| Patent document cited in search report | Publication date (day/month/year) | Patent family member(s) | Publication date (day/month/year) |
|---|---|---|---|
| US 2006174087 A1 | 03 August 2006 | DE 602005008363 D1 | 04 September 2008 |
| | | US 2010275058 A1 | 28 October 2010 |
| | | US 7930511 B2 | 19 April 2011 |
| | | JP 2006209487 A | 10 August 2006 |
| | | JP 4733399 B2 | 27 July 2011 |
| | | US 2011185357 A1 | 28 July 2011 |
| | | US 8683172 B2 | 25 March 2014 |
| | | EP 1686473 A1 | 02 August 2006 |
| | | EP 1686473 B1 | 23 July 2008 |
| | | US 2008215793 A1 | 04 September 2008 |
| | | US 7783856 B2 | 24 August 2010 |
| CN 101257454 A | 03 September 2008 | None | |
| CN 113940044 A | 14 January 2022 | AU 2020279972 A1 | 02 December 2021 |
| | | EP 3973396 A2 | 30 March 2022 |
| | | US 2020374234 A1 | 26 November 2020 |
| | | US 11722422 B2 | 08 August 2023 |
| | | US 2020374233 A1 | 26 November 2020 |
| | | US 11489779 B2 | 01 November 2022 |
| | | WO 2020236782 A2 | 26 November 2020 |
| | | WO 2020236782 A3 | 07 January 2021 |
| | | US 2023370385 A1 | 16 November 2023 |
| | | US 2020374238 A1 | 26 November 2020 |
| | | US 11627091 B2 | 11 April 2023 |
| US 7209489 B1 | 24 April 2007 | None | |

Form PCT/ISA/210 (patent family annex) (July 2022)